# EUROPEAN PATENT SPECIFICATION

(11) **EP 4 276 798 B1**
(45) Date of publication and mention of the grant of the patent: **27.08.2025**
(21) Application number: 22901494.9
(22) Date of filing: 26.07.2022
(51) Int. Cl.: G09B 9/00, G09B 19/24, G09B 5/02, H01M 50/105, B29C 65/00, H01M 10/04

(54) **DSF&EOL SIMULATION DEVICE AND METHOD FOR SECONDARY BATTERY PRODUCTION**
DSF&EOL-SIMULATIONSVORRICHTUNG UND VERFAHREN ZUR HERSTELLUNG EINER SEKUNDÄRBATTERIE
DISPOSITIF DE SIMULATION DSF&EOL ET PROCÉDÉ DE PRODUCTION DE BATTERIES SECONDAIRES

(30) Priority: 03.12.2021 KR 20210171701
(43) Date of publication of application: 15.11.2023
(73) Proprietor: LG Energy Solution, Ltd., Seoul 07335 (KR)
(72) Inventor: KWON, Min Hee, Daejeon 34122 (KR); JO, Moon Kyu, Daejeon 34122 (KR); JUNG, Daewoon, Daejeon 34122 (KR); KIM, Youngduk, Daejeon 34122 (KR); KIM, Nam Hyuck, Daejeon 34122 (KR); JEON, Su Ho, Daejeon 34122 (KR)
(74) Representative: BCKIP Part mbB
(86) International application number: PCT/KR2022/010955
(87) International publication number: WO 2023/101133

(56) References cited:
- CA-A1- 3 103 277
- CN-A- 112 526 374
- CN-U- 214 671 372
- KR-A- 20180 054 428
- KR-B1- 101 675 348
- KR-B1- 102 063 604
- US-A1- 2021 043 011

## Description

### Technical Field

The present invention specifically relates to a simulation device and a simulation method for Double Side Folding and End Of Line (DSF&EOL) for secondary battery production as well as a computer program, and this disclosure more generally relates to a simulation device and a simulation method for DSF&EOL for training secondary battery production workers.

### Background Art

Due to the recent growth of the electric vehicle market, the demand for developing and producing secondary batteries is rapidly increasing. The number of production plants for secondary battery production is also growing in response to the increase in demand for secondary batteries. However, the industry is experiencing a significant shortage of skilled workers for operating secondary battery production plants.

Meanwhile, in the past, training and education of new workers were carried out in such a way of learning a skill by watching experienced workers, but it became difficult to train and educate new workers for a long time due to the busy production schedule of secondary batteries. In addition, it is difficult to find a sufficient number of skilled workers due to the frequent resignation of workers. In addition, even if a worker is trained in a general method of operating a factory, it is not easy for the worker to immediately respond to various defect situations that may occur during factory operation.

US 2021/043011 A1 describes an immersive ecosystem comprising a virtual reality (VR) headset and one or more sensors to measure user responses to dynamic 3D assets within 3D renderings. The system includes an AI engine that adjusts the 3D assets based on user responses to enhance learning, training, and treatment experiences. The sensors can include technologies like EEG, ECG, heart rate sensors, and more. The system is designed for applications across various fields, including defense, healthcare, and commercial training, providing real-time feedback and adjustments to optimize user performance and learning outcomes.

CA 3103277 A1 outlines a virtual reality (VR) training and evaluation system designed to provide immersive training experiences for users in hazardous occupational fields, such as electrical line work and construction. The system includes a visual display device, user input devices, computer processors, memory, and network communication capabilities. It simulates virtual environments where users perform tasks, and their interactions are monitored against predefined safety and efficiency criteria. The system evaluates user performance, providing safety, efficiency, and step-process evaluations. It supports multi-user environments and can be used for training, evaluation, and certification purposes, offering a safer alternative to hands-on training in potentially dangerous settings.

KR 20180054428 A relates to optimizing battery design through systems and methods that involve determining operating parameters of battery components, including storage and electrical components. The document describes a process where an initial working solution for a battery design layout is created, followed by iterative generation of possible solutions using a local search algorithm. The algorithm swaps components within the design layout to find optimal configurations, guided by a tabu list that restricts certain swaps. The system evaluates solutions based on objective function values derived from the operating parameters of the components. This can enhance battery performance by efficiently determining the best design layout through computational methods, reducing variations in battery performance caused by individual component differences.

CN 214671372 U describes an automated control training platform designed to simulate the production of lithium batteries. The platform includes a transparent packaging cavity and a filling cavity, with a rotating plate and a driving mechanism to simulate the winding of electrode sheets. It also features a piston slide and an electric telescopic rod to simulate the extrusion of filling liquid into the packaging cavity. This setup allows for the observation and simulation of the lithium battery manufacturing process, providing a practical training tool that combines theoretical and hands-on learning to improve workers' professional skills and practical experience in lithium battery production.

CN 112526374 A describes a multi-station detection device for new energy vehicle battery production that can perform multi-environment simulations. The device includes a base, linkage, containing boxes, elastic airbags, and an air storage bag. It is designed to simulate various driving conditions and environmental factors to test the performance and safety of new energy vehicle batteries. The system can automatically detect faults, disconnect power, and trigger alarms to enhance safety. It also features mechanisms to buffer impacts and release carbon dioxide for fire extinguishing in case of battery failures, improving the accuracy and safety of battery testing.

KR 101 675 348 B1 discloses a method and a system for a simulation of secondary cell design comprising the steps of receiving setting data related to an ion cell electrode, determining a simulation system based on the setting data, transmitting the setting data to at least one server among a plurality of simulation servers executing different simulations based on the determined simulation system, and displaying a result of the simulation when the result of simulation is received from a server to which the setting data are transmitted. The secondary cell simulation system allows a novice to design material related with cathode, anode and electrolytes and predict stability and reliability of each electrode, which can improve the efficiency of secondary cell development.

KR 102 063 604 B1 outlines a method for improving the safety and performance of secondary batteries used in electric vehicles. It involves a strategic selection and arrangement of electrode materials based on their thermal characteristics. The method includes calculating temperature distributions within the battery during operation and choosing materials that can withstand these temperatures without degrading. By optimizing the thermal management of the battery, this can enhance stability, prevent overheating, and extend the lifespan. This design approach can ensure that the battery remains reliable and efficient under various operating conditions, contributing to the overall safety and performance of electric vehicles.

### DESCRIPTION OF THE INVENTION

### TECHNICAL OBJECTIVES

The object of the present invention is to provide a DSF&EOL simulation device and method for secondary battery production as well as a computer program stored in a computer-readable medium which can solve the technical problem to improve the production of secondary batteries and to reduce the loss due to the occurrence of defects. This object is solved by the attached independent claims and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "...aspect according to an example", "the disclosure describes", or "the disclosure" describe technical teaching which relates to the understanding of the invention or its embodiments, which, however, is not claimed as such.

### TECHNICAL MEANS

The present is implemented in various ways including a device and method and a computer program stored in a computer-readable medium.

A simulation device for secondary battery production according to the invention includes a memory configured to store at least one instruction and at least one processor configured to execute the at least one instruction stored in the memory. The at least one instruction includes instructions for: executing an apparatus operating unit including 3D Double Side Folding and End Of Line (DSF&EOL) related to secondary battery production and quality information of a material produced by the 3D DSF&EOL; executing a facility operating unit including a plurality of adjustment parameters for determining an operation of the 3D DSF&EOL; obtaining at least one of first user action information obtained through the apparatus operating unit or first user condition information obtained through the facility operating unit; determining an operation of the 3D DSF&EOL based on at least one of the obtained first user action information or first user condition information; and double-folding a side wing of a cell related to the 3D DSF&EOL and checking characteristics based on the determined operation.

According to an embodiment of the present disclosure, the at least one instruction may further include instructions for executing a 3D DSF&EOL training scenario based on an operating process of the 3D DSF&EOL; executing at least one of operating the 3D DSF&EOL according to the 3D DSF&EOL training scenario, displaying a user action guide on the apparatus operating unit, or displaying a user condition guide on the facility operating unit; obtaining at least one of the first user action information based on the user action guide display or the first user condition information based on the user condition guide display; and changing at least one of the apparatus operating unit or the facility operating unit based on at least one of the obtained first user action information or first user condition information.

According to an embodiment of the present disclosure, the at least one instruction may further include instructions for determining one or more quality parameters for determining the quality of a material produced by the 3D DSF&EOL; calculating a value corresponding to each of the determined one or more quality parameters, while the operation of the 3D DSF&EOL is being executed, based on the operation of the 3D DSF&EOL being executed; and outputting quality information related to the quality of the material produced by the 3D DSF&EOL based on the calculated value corresponding to each of the one or more quality parameters.

According to an embodiment of the present disclosure, the at least one instruction may further include instructions for determining one or more defect scenarios among a plurality of defect scenarios related to the quality of the material produced by the 3D DSF&EOL; and changing at least one of the operation of the 3D DSF&EOL or the quality information related to the quality of the material based on the determined one or more defect scenarios.

According to an embodiment of the present disclosure, the defect scenario may include at least one of a cutting amount defect scenario, a full-width defect scenario, an exterior crack defect scenario, or an insulation voltage measurement defect scenario.

According to an embodiment of the present disclosure, the at least one instruction may further include instructions for executing at least one of the cutting amount defect scenario, the full-width defect scenario, the exterior crack defect scenario, or the insulation voltage measurement defect scenario; obtaining at least one of second user action information touching or dragging at least a part of an area of the 3D DSF&EOL or second user condition information changing an adjustment parameter of the facility operating unit; correcting the 3D DSF&EOL based on at least one of the obtained second user action information or second user condition information; calculating a value corresponding to each of one or more quality parameters related to the quality of the material produced by the corrected 3D DSF&EOL; and correcting quality information related to the quality of the material produced by the corrected 3D DSF&EOL based on the calculated value corresponding to each of the one or more quality parameters.

According to an embodiment of the present disclosure, the at least one instruction may further include instructions for obtaining third user action information touching or dragging at least a part of an area corresponding to quality check of the material produced by the 3D DSF&EOL; and outputting a defective portion of the material based on the third user action information.

According to an embodiment of the present disclosure, the at least one instruction may further include instructions for displaying a cup line, a 270-degree folding line, a 90-degree folding line, and a pouch end line on a side wing of the material produced by the 3D DSF&EOL.

According to an embodiment of the present disclosure, the at least one instruction may further include instructions for displaying a state and a position of a conductive rubber of the 3D DSF&EOL.

According to an embodiment of the present disclosure, the at least one instruction may further include instructions for outputting guide information including condition information and action information required to resolve the one or more defect scenarios.

A simulation method of DSF&EOL for secondary battery production according to the invention includes: executing an apparatus operating unit including 3D DSF&EOL related to secondary battery production and quality information of a material produced by the 3D DSF&EOL; executing a facility operating unit including a plurality of adjustment parameters for determining an operation of the 3D DSF&EOL; obtaining at least one of first user action information obtained through the apparatus operating unit or first user condition information obtained through the facility operating unit; determining an operation of the 3D DSF&EOL based on at least one of the obtained first user action information or first user condition information; and double-folding a side wing of a cell related to the 3D DSF&EOL and checking characteristics based on the determined operation.

According to an embodiment of the present disclosure, the simulation method may further include: executing a 3D DSF&EOL training scenario based on an operating process of the 3D DSF&EOL; executing at least one of operating the 3D DSF&EOL according to the 3D DSF&EOL training scenario, displaying a user action guide on the apparatus operating unit, or displaying a user condition guide on the facility operating unit; obtaining at least one of the first user action information based on the user action guide display or the first user condition information based on the user condition guide display; and changing at least one of the apparatus operating unit or the facility operating unit based on at least one of the obtained first user action information or first user condition information.

According to an embodiment of the present disclosure, the simulation method may further include: determining one or more quality parameters for determining the quality of a material produced by the 3D DSF&EOL; calculating a value corresponding to each of the determined one or more quality parameters, while the operation of the 3D DSF&EOL is being executed, based on the operation of the 3D DSF&EOL being executed; and outputting quality information related to the quality of the material produced by the 3D DSF&EOL based on the calculated value corresponding to each of the one or more quality parameters.

According to an embodiment of the present disclosure, the simulation method may further include: determining one or more defect scenarios among a plurality of defect scenarios related to the quality of the material produced by the 3D DSF&EOL; and changing at least one of the operation of the 3D DSF&EOL or the quality information related to the quality of the material based on the determined one or more defect scenarios.

According to an embodiment of the present disclosure, the defect scenario may include at least one of a cutting amount defect scenario, a full-width defect scenario, an exterior crack defect scenario, or an insulation voltage measurement defect scenario.

According to a not claimed embodiment of the present method, the simulation method may further include: executing at least one of the cutting amount defect scenario, the full-width defect scenario, the exterior crack defect scenario, or the insulation voltage measurement defect scenario; obtaining at least one of second user action information touching or dragging at least a part of an area of the 3D DSF&EOL or second user condition information changing an adjustment parameter of the facility operating unit; correcting the 3D DSF&EOL based on at least one of the obtained second user action information or second user condition information; calculating a value corresponding to each of one or more quality parameters related to the quality of the material produced by the corrected 3D DSF&EOL; and correcting quality information related to the quality of the material produced by the corrected 3D DSF&EOL based on the calculated value corresponding to each of the one or more quality parameters.

According to a not claimed embodiment of the present method, the simulation method may further include: obtaining third user action information touching or dragging at least a part of an area corresponding to quality check of the material produced by the 3D DSF&EOL; and outputting a defective portion of the material based on the third user action information.

According to a not claimed embodiment of the present method, the simulation method may further include: displaying a cup line, a 270-degree folding line, a 90-degree folding line, or a pouch end line on a side wing of the material produced by the 3D DSF&EOL.

According to a not claimed embodiment of the present method, the simulation method may further include: displaying a state and a position of a conductive rubber of the 3D DSF&EOL.

According to a not claimed embodiment of the present method, the simulation method may further include: outputting guide information including condition information and action information required to resolve the one or more defect scenarios.

The invention also provides a computer program stored in a computer-readable medium to execute the simulation method according to an embodiment of the present disclosure on a computer.

In the following description, features which in the above summary of the invention have been marked as "not claimed" or "according to the invention" are also hereinafter, when they are described and explained with reference to the drawings, to be understood as "not claimed" or "not part of the invention" or "according to the invention". Even if sometimes in the description of the embodiments below, features marked above "according to the invention" or "the invention" are referred to in connection with the words "can" or "may" or other expressions which contain the notion of them being "optional", it should be understood that indeed such features are considered essential to the invention as claimed and not optional.

### EFFECTS OF THE INVENTION

In various embodiments of the present disclosure, a user performing secondary battery production may perform training related to a method of operating a secondary battery production apparatus, a method of handling a defect situation, and so on through a simulation apparatus before being put into work; through training of the user, the loss due to the occurrence of defects may be considerably reduced so that the efficiency of the secondary battery production task may be improved effectively.

In various embodiments of the present disclosure, by generating a defect scenario based on error information in an actual apparatus, the simulation apparatus may effectively generate training contents optimized for actual work environments.

In various embodiments of the present disclosure, a simulation apparatus may generate and provide a defect scenario having various values related to the malfunction of a secondary battery production apparatus to the user; accordingly, the user may deal with a malfunction situation that may occur in an actual apparatus without help from others and may effectively learn how to respond to various situations.

In various embodiments of the present disclosure, a user may easily learn how to operate a secondary battery production apparatus through the simulation progressed step by step according to the user's task skill level.

In various embodiments of the present disclosure, a user may easily identify and process a defect scenario for which the user lacks training; thus, the user may be trained only in the defect scenario for which the user has low work skills.

In various embodiments of the present disclosure, a user may effectively improve the ability to respond to defects by training using a defect scenario generated based on a malfunction occurring in an actual work environment.

The technical effects of the present disclosure are not limited to the technical effects described above, and other technical effects not mentioned herein may be understood clearly by those with ordinary knowledge in the art (referred to as a "person with ordinary skills") to which the present disclosure belongs from the appended claims.

### BRIEF DESCRIPTION OF THE DRAWINGS

Embodiments of the present disclosure will be described with reference to the accompanying drawings described below, wherein similar reference numbers denote similar constituting elements, but the present disclosure is not limited thereto.
FIG. 1 illustrates an example in which a user uses a simulation apparatus according to an embodiment of the present disclosure.
FIG. 2 is a functional diagram illustrating an internal structure of a simulation apparatus according to an embodiment of the present disclosure.
FIG. 3 is a block diagram illustrating an example in which a simulation apparatus operates according to an embodiment of the present disclosure.
FIG. 4 illustrates an example of a display screen displayed or output on an apparatus operating unit according to an embodiment of the present disclosure.
FIG. 5 illustrates an example of a display screen displayed or output on an apparatus operating unit according to another embodiment of the present disclosure.
FIG. 6 illustrates an example in which a cutting amount defect scenario has occurred according to an embodiment of the present disclosure.
FIG. 7 illustrates an example in which a full-width defect scenario has occurred according to an embodiment of the present disclosure.
FIG. 8 illustrates an example in which an exterior crack defect scenario has occurred according to an embodiment of the present disclosure.
FIG. 9 illustrates an example in which a defect scenario has occurred according to an embodiment of the present disclosure.
FIG. 10 illustrates an example in which operational capability information and a test result are generated according to an embodiment of the present disclosure.
FIG. 11 illustrates an example of a simulation method for secondary battery production according to an embodiment of the present disclosure.
FIG. 12 illustrates an example of a simulation method of a DSF&EOL apparatus for secondary battery production according to an embodiment of the present disclosure.
FIG. 13 illustrates an example of a method of calculating a test result according to an embodiment of the present disclosure.
FIG. 14 illustrates an example of a method of generating a defect scenario according to an embodiment of the present disclosure.
FIG. 15 illustrates an exemplary computing device for performing the method and/or embodiments.

### [Description of Reference numeral]

100: Simulation apparatus
110: User
120: Facility operating unit
130: Apparatus operating unit

### MODES FOR IMPLEMENTING THE INVENTION

Hereinafter, specific embodiments of the present invention will be described in detail with reference to appended drawings.

In the accompanying drawings, identical or corresponding constituting elements are assigned the same reference numbers. In addition, overlapping descriptions of the same or corresponding constituting elements may be omitted in the description of the embodiments below. However, even if descriptions regarding a constituting element are omitted, it should not be interpreted that the constituting element is not included in the corresponding embodiment.

The advantages and features of the present disclosure, and a method of achieving them will be clearly understood with reference to the embodiments described together with appended drawings.

Terms used in the present disclosure will be briefly defined, and disclosed embodiments will be described in detail. Terms used in the present disclosure have been selected as much as possible from general terms relevant to the functions of the present disclosure and currently in wide use; however, the selection of terms may be varied depending on the intention of those persons skilled in the corresponding field, precedents, or emergence of new technologies. In addition, in a particular case, some terms may be selected arbitrarily by the applicant, and in this case, detailed definitions of the terms will be provided in the corresponding description of the present disclosure. Therefore, the terms used in the present disclosure should be defined not simply by their apparent name but based on their meaning and context throughout the present disclosure.

In the present disclosure, a singular expression should be understood to include a plural expression unless the context explicitly indicates a singular expression. In addition, a plural expression should be understood to include a singular expression unless the context explicitly indicates a plural expression. Throughout the disclosure, unless otherwise explicitly stated, if a particular element is said to include some particular element, it means that the former may further include other particular elements rather than exclude them.

The term "comprises (includes)" and/or "comprising (including)" used in the present disclosure indicates the existence of features, steps, operations, components, and/or constituting elements; however, the term does not exclude addition of one or more other functions, steps, operations, components, constituting elements, and/or a combination thereof.

In the present disclosure, when a particular constituting element is referred to as being "coupled to," "combined with," "connected to," "related to," or as "responding to" any other constituting element, the particular constituting element may be directly coupled to, combined with, connected to, and/or related to, or may directly respond to the other constituting element; however, the present disclosure is not limited to the relationship. For example, there may be one or more intermediate constituting elements between a particular constituting element and another constituting element. In addition, in the present disclosure, "and/or" may include one or more of the listed items or a combination of at least a portion of one or more of the listed items.

In the present disclosure, the terms such as "first" and "second" are introduced to distinguish one constituting element from the others, and thus the constituting element should not be limited by those terms. For example, a "first" constituting element may be used to indicate a constituting element in a form similar to or the same as a "second" constituting element.

In the present disclosure, a "secondary battery" may refer to the battery made using a material in which the redox process between a current and the material may be repeated several times. For example, to produce a secondary battery, processing such as mixing, coating, roll pressing, slitting, notching and drying, lamination, folding and stacking, lamination and stacking, packaging, charging and discharging, degassing, and DSF&EOL(Double Side Folding & End Of Line) may be performed. In this case, separate production equipment (apparatus) for performing each process may be used. At this time, each production equipment may be operated according to adjustment parameters and configuration values set or changed by a user.

In the present disclosure, a "user" may refer to a worker who performs secondary battery production and operates secondary battery production equipment and may include a user training through a simulation apparatus for secondary battery production equipment. In addition, a "user account" is an ID created to use the simulation apparatus or assigned to each user; the user may log into the simulation apparatus using the user account and perform a simulation, but the present disclosure is not limited thereto.

In the present disclosure, the "facility operating unit," "apparatus operating unit," and "quality checking unit" are software programs included in the simulation apparatus or displayed on an input/output device related to the simulation apparatus and/or an input/output device and may refer to a device and/or a program outputting an image or a video of a 3D model apparatus or receiving various inputs from a user and delivering the received inputs to the simulation apparatus.

In the present disclosure, the "3D model apparatus" is a virtual apparatus that implements actual secondary battery production equipment, which may operate in a way that images, videos, or animations of the virtual apparatus are executed, modified, and/or corrected based on the information input by a user. In other words, the "operation of the 3D model apparatus" may include images, videos, and animations of a virtual apparatus executed, modified, and/or corrected. For example, the 3D model apparatus may include apparatus for performing mixing, coating, roll pressing, slitting, notching and drying, lamination, folding and stacking, lamination and stacking, packaging, charging/discharging, degassing, and DSF&EOL(Double Side Folding & End Of Line). Additionally or alternatively, the 3D model apparatus may be implemented as a 2D model apparatus. In other words, in the present disclosure, the 3D model apparatus is not limited to a 3D model but may include a 2D model. Accordingly, the 3D model apparatus may include terms such as a 2D model apparatus, an animation model apparatus, and a virtual model apparatus.

In the present disclosure, "user condition information" may include a user input that sets or modifies at least a part of conditions and/or values among adjustment parameters or may correspond to the information generated by an arbitrary algorithm predetermined based on the corresponding user input.

In the present disclosure, "user action information" may include a user input such as a touch input, a drag input, a pinch input, and a rotation input performed on at least a part of the 3D model apparatus or may correspond to the information generated by an arbitrary algorithm predetermined based on the corresponding user input.

In the present disclosure, a "defect scenario" may be a scenario that changes the operation of a 3D model apparatus within a malfunction range or includes values or conditions for changing quality information of a material determined by the operation of the 3D model apparatus into a defect range. For example, when a defect scenario occurs during the operation of the simulation apparatus, the operation or quality information of the 3D model apparatus may be changed based on the generated defect scenario. In addition, when the operation or quality information of the 3D model apparatus changed by the defect scenario is corrected to lie within a normal range, the corresponding defect scenario may be determined as having been resolved.

In the present disclosure, the "training scenario" may include a scenario for operating secondary battery production equipment. For example, suppose the secondary battery production equipment is DSF&EOL; in that case, the training scenario may include a double side folding (DSF) operation training scenario, an end of line (EOL) operation training scenario, and a condition adjustment training scenario. Through the DSF operation training scenario, a user may be trained in a DSF apparatus operation process such as loading, lead cutting, pouch corner cutting, wing pressing, pouch side cutting, wing pressing, 90-degree folding, 180-degree folding, wing pressing, 270-degree folding, and taping. Through the EOL operation training scenario, a user may be trained in an EOL apparatus operation process such as internal resistance (IR) and open circuit voltage (OCV) measurement, insulation voltage measurement, thickness measurement, weight measurement, width measurement, length measurement, QR code printing, visual inspection, and packaging. The condition adjustment training scenario may include changing values and conditions for a 3D model apparatus to operate in a malfunction range, and the user may learn a method for checking the malfunction state of the 3D model apparatus and correcting the state to lie within a normal operation range. In other words, the condition adjustment training scenario may be a process of learning a method for resolving various defect scenarios that may occur in a DSF&EOL apparatus. Furthermore, the training scenario may include a training to check each equipment unit constituting the 3D model apparatus and change the state, a training to adjust an adjustment parameter related to the DSF, and a training to adjust an adjustment parameter related to the EOL.

In the present disclosure, the "mixing process" may be a process of producing slurry by mixing active material, a binder, and other additives with a solvent. For example, a user may determine or adjust the addition ratio of active material, conductive material, additives, and a binder to produce slurry of specific quality. In addition, in the present disclosure, the "coating process" may be a process of applying the slurry on the foil with a particular amount and shape. For example, a user may determine or adjust a coater apparatus's die or slurry temperature to perform coating with a quantity and a shape of specific quality.

In the present disclosure, the "roll pressing process" may be a process in which coated electrodes are passed between two rotating upper and lower rolls and pressed to a certain thickness. For example, a user may determine or adjust the spacing between rolls to maximize the cell capacity by increasing the electrode density through the roll pressing process. In addition, in the present disclosure, the "slitting process" may be a process of passing electrodes between two upper and lower rotating knives and cutting the electrodes to have a predetermined width. For example, a user may determine or adjust various adjustment parameters to maintain a constant electrode width.

In the present disclosure, the "notching and drying process" may be a process of removing moisture after punching out an electrode into a particular shape. For example, a user may determine or adjust a cutting height, a length and the like to punch the electrode into a particular shape with specific quality. In addition, in the present disclosure, the "lamination process" may be a process of sealing and cutting the electrode and the separator. For example, a user may determine or adjust a value corresponding to the x-axis and a value corresponding to the y-axis to perform cutting at a specific quality.

In the present disclosure, the "package process" may be a process of attaching a lead and a tape to an assembled cell and packaging the assembled cell in an aluminum pouch. A cell that has undergone the packaging process may be subjected to a charging/discharging process, at which time a gas is generated in the cell. The "degas process" may be a process of removing the gas generated in the cell in the charging/discharging process and re-sealing the cell. In addition, in the present disclosure, the "DSF&EOL process" may consist of the DSF process and the EOL process, where the DSF process may be a process of folding wings formed in the pouch of the cell at 90 degrees, 180 degrees, and 270 degree, and the EOL process may be a process of checking characteristics such as thickness, weight, width, length, and insulation voltage of a cell using a measurement device or vision before shipment of the cell.

For the processes above, a user may adjust conditions or values of various adjustment parameters or change configuration values corresponding to the apparatus so that each process is performed with specific quality within a normal range.

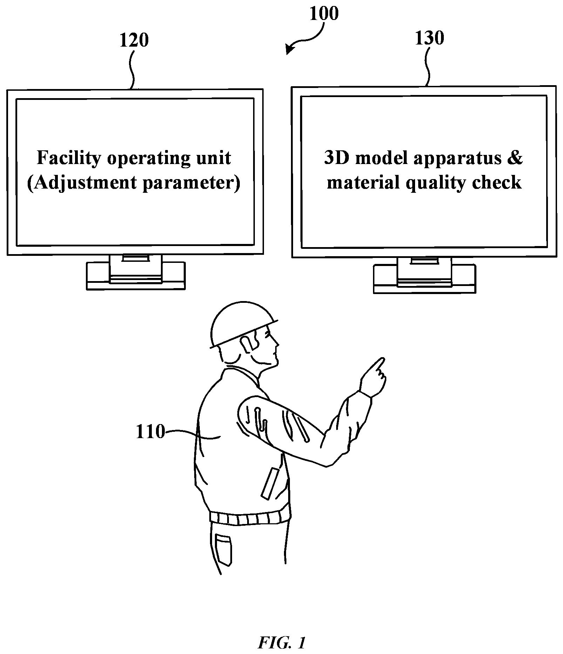

FIG. 1 illustrates an example in which a user 110 uses a simulation apparatus 100 according to an embodiment of the present disclosure. As illustrated in the figure, the simulation apparatus 100 is used for training a secondary battery production worker (e.g., user 110) and may include, for example, a facility operating unit 120 and an apparatus operating unit 130. For example, the user 110 may operate the simulation apparatus 100 which implements the actual secondary battery production equipment virtually (e.g., 2D, 3D, etc.) and learn how to use the secondary battery production equipment or how to respond when the quality of the manufactured product is degraded.

According to an embodiment, the facility operating unit 120 may include a plurality of adjustment parameters for determining the operation of the 3D model apparatus displayed on the apparatus operating unit 130, and the user 110 may execute, change, and/or correct the operation of the 3D model apparatus by changing at least a part of the conditions among a plurality of adjustment parameters. In other words, the operation of the 3D model apparatus may be changed or corrected adaptively as the adjustment parameters input by the user 110 are changed.

The apparatus operating unit 130 may include a 3D model apparatus related to the production of secondary batteries. Here, the 3D model apparatus may include, but not limited to, a 3D model related to secondary battery production equipment such as, but not limited to, a mixer, a coater, a roll presser, a slitter, a notching and drying apparatus, a lamination apparatus, a folding and stacking apparatus, a lamination and stacking apparatus, a packaging apparatus, a charge/discharge apparatus, a degas apparatus, and a DSF&EOL apparatus, and may further include a 3D model of any other apparatus used for the production of secondary batteries.

According to an embodiment, the user 110 may manipulate the 3D model apparatus or change the configuration of the 3D model apparatus by applying a touch input, a drag input, or a pinch input to the 3D model apparatus (at least a part of the 3D model apparatus) included in the apparatus operating unit 130. Furthermore, the user 110 may check or enlarge/reduce an arbitrary area of the 3D model apparatus through view switching, operate the 3D model apparatus by performing a touch input, or change the configuration of the 3D model apparatus. Here, it is assumed that the apparatus operating unit 130 displays a 3D model apparatus related to secondary battery production; however, the present disclosure is not limited to the assumption, and thus, an apparatus related to a specific process in the secondary battery production process may be implemented and displayed as a 2D model apparatus.

The apparatus operating unit 130 may include means for checking quality of a material produced by the 3D model apparatus. After changing at least one adjustment parameter from among a plurality of adjustment parameters in the facility operating unit 120, the user may check the quality of the material in the apparatus operating unit 130 and learn a change in the quality of the material caused by the adjustment of each adjustment parameter.

At least one of the facility operating unit 120 or the apparatus operating unit 130 may include quality information related to the quality of the material produced by the 3D model apparatus. Here, the quality information may be generated by performing an operation on the quality parameter based on a predetermined criterion and/or algorithm. The user 110 may check the quality information of the material generated in response to changing the adjustment parameter or manipulating the 3D model apparatus through the at least one of the facility operating unit 120 or the apparatus operating unit 130. Additionally or alternatively, in a specific process according to the secondary battery production process, a separate quality check unit displaying quality information of the material may be independently configured.

According to an embodiment, the quality information may be displayed in association with the 3D model apparatus of the apparatus operating unit 130, checked by a specific operation of the 3D model apparatus, additionally displayed on a screen of part of the 3D model apparatus, or displayed as a change in the parameter setting value of the facility operating unit 120. For example, when a button for quality check displayed on the apparatus operating unit 130 is selected, quality information may be displayed or output on at least one of the apparatus operating unit 130 or the facility operating unit 120. In another example, the quality information may be displayed or output in a manner of a color change of at least a part of the 3D model apparatus, or an alarm. In another example, when a malfunction occurs in the operation of the 3D model apparatus or when a defect occurs in the quality of the material produced by the 3D model apparatus, the malfunctioned/defective area may be immediately displayed or output on the 3D model apparatus. In another example, a parameter value related to the quality of the material produced by the 3D model apparatus may be displayed or output on the facility operating unit 120. For example, if the secondary battery production equipment is the DSF of the DSF&EOL, a cutting length and a folding position before folding are important determining factors of the quality of the material. Factors affecting the cutting length may include a position of the cutting unit, and factors affecting the folding position may include a position of the folding unit and a height of a folding knife. In addition, when the secondary battery production equipment is the EOL of the DSF&EOL, insulation measurement is an important determining factor of the quality of the material. Factors affecting the insulation measurement may include poor contact due to wear of a conductive rubber and poor contact due to a location of the conductive rubber. In the event of a malfunction of the relevant factors or an error in inputting the adjustment parameter value, a defect of a material may be displayed on at least one of the 3D model apparatus or the facility operating unit or an alarm may be output, and optionally, for more accurate quality check, the user may identify a location of the defect and a cause of the defect through the quality check process of the 3D model apparatus.

In FIG. 1, the simulation apparatus 100 is illustrated as including one facility operating unit 120 and one apparatus operating unit 130; however, the present disclosure is not limited to the specific illustration, and an arbitrary number of facility operating units 120 and apparatus operating units 130 may be employed depending on the type of 3D model apparatus related to the simulation apparatus 100, and an arbitrary number of quality checking units may be further included. With such a configuration, the user 110 performing secondary battery production may be trained in a method of operating the secondary battery production equipment, a method of responding to a defect situation before being put into work, and the like; by training the user 110 as described above, loss due to the occurrence of defects may be considerably reduced, and thus, the efficiency of the secondary battery production task may be improved effectively.

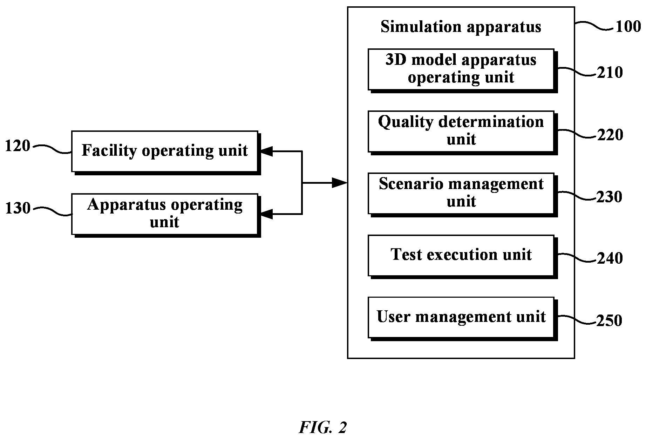

FIG. 2 is a functional diagram illustrating an internal structure of a simulation apparatus 100 according to an embodiment of the present disclosure. As illustrated in the figure, the simulation apparatus 100 (e.g., at least one processor of the simulation apparatus 100) may include, but not limited to, a 3D model apparatus operating unit 210, a quality determination unit 220, a scenario management unit 230, a test execution unit 240, and a user management unit 250. The simulation apparatus 100 may communicate with the facility operating unit 120 and the apparatus operating unit 130, and exchange data and/or information related to the 3D model apparatus.

The 3D model apparatus operating unit 210 may execute, change, and/or correct the operation of the 3D model apparatus displayed on the apparatus operating unit 130 according to a user's manipulation. In addition, the operation of the facility operating unit 120 may be executed, changed and/or corrected based on the execution, change and/or correction of the operation of the model apparatus. According to an embodiment, the 3D model apparatus operating unit 210 may obtain or receive user action information and/or user condition information using information input from the user (e.g., a secondary battery production worker). Then, the 3D model apparatus operating unit 210 may determine or change the operation of the 3D model apparatus using the obtained or received user action information and/or user condition information.

According to an embodiment, the user action information is generated based on a user input such as touching and/or dragging at least a part of an area of the 3D model apparatus included in the apparatus operating unit 130 and may include the information on the amount of change in a setting value of the 3D model apparatus according to the user input. For example, when the 3D model apparatus is a DSF&EOL apparatus for secondary battery production, the user may touch (or drag in an arc direction) a conductive rubber fixing bolt area to loosen a bolt, touch or drag the existing conductive rubber to remove it, and then touch or drag a new conductive rubber to install a new one. In addition, by touching a specific area of the 3D model apparatus, the corresponding area may be enlarged or reduced. In this case, user action information based on the fixing bolt, the conductive rubber, the specific area, and the like may be generated.

According to an embodiment, the user condition information is generated based on a user input that changes conditions and/or values of at least a part of parameters among a plurality of adjustment parameters included in the facility operating unit 120 and may include information about an amount of change in a condition value to determine the operation of the 3D model apparatus according to the user input. For example, when the 3D model apparatus is a DSF&EOL apparatus for secondary battery production, the user may change, for example, a position parameter of the cutting unit and a position parameter of the folding unit through the facility operating unit 120; in this case, user condition information based on the changed value of the position parameter of the cutting unit and the position parameter of the folding unit may be generated.

As described above, when the operation of the 3D model apparatus is executed based on the user condition information and/or the user action information, the quality determination unit 220 may determine or generate quality information related to the quality of a material produced by the operation of the 3D model apparatus. In other words, when the 3D model apparatus operates (when animations or images are played to operate the 3D model apparatus), the quality information may be determined or generated differently according to a setting value or a condition value of the corresponding 3D model apparatus. In other words, the user may change or adjust the quality of a material produced by a 3D model apparatus by changing adjustment parameters or setting at least a part of an area of the corresponding 3D model apparatus using a touch input.

According to an embodiment, the quality determination unit 220 may determine or extract one or more quality parameters for determining the quality of a material produced by the 3D model apparatus, and while the operation of the 3D model apparatus is in execution, a value corresponding to each of one or more quality parameters determined based on the operation of the 3D model apparatus under execution may be calculated. Here, a predetermined, arbitrary algorithm may calculate the value corresponding to the quality parameter. In addition, the quality determination unit 220 may generate quality information related to the quality of a material (e.g., a cell pouch) produced by the 3D model apparatus based on the calculated value corresponding to each of the one or more quality parameters. For example, in a case where the 3D model apparatus is a DSF&EOL apparatus for secondary battery production, when a user adjusts a position parameter of the cutting unit, a value corresponding to the cutting amount of the material (e.g., the cell pouch) may be calculated; when the user adjusts a y-axis position parameter of the 90-degree folding unit or a y-axis position parameter of the 270-degree folding unit, a value corresponding to a 90-degree folding position or a 270-degree folding position of the cell pouch may be calculated; and when the user adjusts a z-axis position parameter of the 270-degree folding unit, a quality value related to related to exterior cracks generated at the 270-degree folding position may be calculated. In this case, the quality determination unit 220 may generate or output the calculated quality information of the material.

According to an embodiment, a defect scenario related to a malfunction of the 3D model apparatus may occur during or before the operation of the 3D model apparatus. When a defect scenario occurs as described above, at least a part of the setting values, condition values, and quality information of the 3D model apparatus may be changed to lie between an abnormal range based on the defect scenario. Here, the abnormal range may mean a range in which the quality information related to the quality of a material deviates from the upper and lower limits of a preconfigured specification.

According to an embodiment, the scenario management unit 230 may determine one or more defect scenarios among a plurality of defect scenarios related to a malfunction of the 3D model apparatus and a plurality of defect scenarios related to the quality of the material and, based on the determined one or more defect scenarios, may change at least one of the operation of the 3D model apparatus or the quality information related to the quality of the material. For example, when the 3D model apparatus is a DSF&EOL apparatus, the plurality of defect scenarios may include a cutting amount defect, a full-width defect, an exterior crack defect, an insulation voltage measurement defect, and the like, and causes of these defects may be different from each other. In this case, the scenario management unit 230 may determine a defect scenario by extracting at least one from among the defect scenarios such as the cutting amount defect, the full-width defect, the exterior crack defect, and the insulation voltage measurement defect, and, according to the determined defect scenario, change the adjustment parameter, operation, and quality information of the 3D model apparatus.

According to an embodiment, when a defect scenario occurs, the user may change the adjustment parameter or the settings of the 3D model apparatus to resolve the occurred defect scenario. In this case, the scenario management unit 230 may receive at least one of user action information or user condition information for resolving the determined one or more defect scenarios and correct the operation of the 3D model apparatus changed based on at least one of the received user action information or user condition information. In addition, while the operation of the corrected 3D model apparatus is in execution, the scenario management unit 230 may calculate a value corresponding to each of a plurality of quality parameters related to the quality of a material produced by the 3D model apparatus based on the operation of the 3D model apparatus in execution and may correct the quality information related to the quality of a material produced by the corrected 3D model apparatus based on the calculated value corresponding to each of the plurality of quality parameters.

Then, the scenario management unit 230 may determine whether one or more defect scenarios have been resolved using the corrected quality information. For example, when the quality of a material falls within a predetermined normal range of a spec, the scenario management unit 230 may determine that the defect scenario has been resolved, but the present disclosure is not limited to the specific operation; when the value of each quality parameter included in the quality information lies within the predetermined normal range of the spec or corresponds to a specific value, the scenario management unit 230 may determine that the defect scenario has been resolved. Additionally or alternatively, when a value calculated by providing each quality parameter to an arbitrary algorithm falls within a predetermined normal range, the scenario management unit 230 may determine that the defect scenario has been resolved.

According to an embodiment, a setting value and a condition value of the 3D model apparatus changed to lie within the range of a malfunction by a defect scenario may be determined in advance for each defect scenario, but the present disclosure is not limited to the specific operation. For example, the defect scenario may be generated based on error information generated when actual secondary battery production equipment malfunctions. In other words, when a malfunction occurs in an external device (e.g., actual secondary battery production equipment) related to the 3D model apparatus, the scenario management unit 230 may obtain error information related to the malfunction and, based on the obtained error information, may generate a defect scenario related to the malfunction of the 3D model apparatus. For example, when a malfunction occurs in the degas process, which is a preceding process of the DSF&EOL in a secondary battery production line, the scenario management unit 230 may obtain a value of each adjustment parameter and a setting value of the apparatus at the time of malfunction in the degassing equipment as error information. The scenario management unit 230 may generate a defect scenario by changing the value of each adjustment parameter and each setting value of the apparatus obtained from an external device to correspond to the 3D model apparatus. Since a defect scenario occurs based on the error information from an actual apparatus using the configuration above, the simulation apparatus 100 may effectively generate training contents optimized for actual work environments.

According to an embodiment, the test execution unit 240 may determine whether one or more defect scenarios have been resolved using the corrected quality information; when it is determined that one or more defect scenarios have been resolved, the test execution unit 240 may calculate a progress time and a loss value of one or more defect scenarios while one or more defect scenarios are in progress. For example, the loss value may include, for example, a material loss value and may be calculated through a predetermined, arbitrary algorithm based on a user's response time, a user input value, and the like. In addition, the test execution unit 240 may generate operational capability information of the 3D model apparatus for a user account based on the calculated progress time and loss value. Here, the user account may refer to an account of a worker who uses the simulation apparatus 100, and the operational capability information represents the work skill level of the user, which may include a work speed, time taken for responding to a defect, the number of NGs, degree of proximity to a target value, and an evaluation score. Additionally, when the corresponding user solves all predetermined types of defect scenarios, the test execution unit 240 may determine whether the user passes a simulation training based on the operational capability information for each defect scenario.

The user management unit 250 may perform management such as registration, modification, and deletion of a user account related to a user who uses the simulation apparatus 100. According to an embodiment, the user may use the simulation apparatus 100 using the user's registered user account. In this case, the user management unit 250 may store and manage information on whether each defect scenario has been resolved and operational capability information for dealing with each defect scenario in an arbitrary database for each user account. Using the information stored by the user management unit 250, the scenario management unit 230 may extract information related to a specific user account stored in the database and extract or determine at least one scenario among a plurality of defect scenarios based on the extracted information. For example, the scenario management unit 230 may extract only a defect scenario in which the working speed is lower than an average working speed based on the information related to the user account or provide the extracted defect scenario to the corresponding user, but the present disclosure is not limited to the specific operation; the defect scenario may be extracted or determined by another arbitrary criterion or a combination of arbitrary criteria.

In FIG. 2, it is assumed that functional configurations included in the simulation apparatus 100 are different from each other; however, the assumption is intended only to help understand the disclosure, and one computing device may perform two or more functions. In addition, the simulation apparatus 100 of FIG. 2 assumes to be distinguished from the facility operating unit 120 and the apparatus operating unit 130; however, the present disclosure is not limited to the assumption, and the facility operating unit 120 and the apparatus operating unit 130 may be included in the simulation apparatus 100. Using the configuration above, the simulation apparatus 100 may generate a defect scenario having various values related to the malfunction of the secondary battery production equipment and provide the generated scenarios to the user; accordingly, the user may be trained in a method of resolving a malfunction situation that may occur in an actual apparatus without help from others and effectively learn how to respond to each situation.

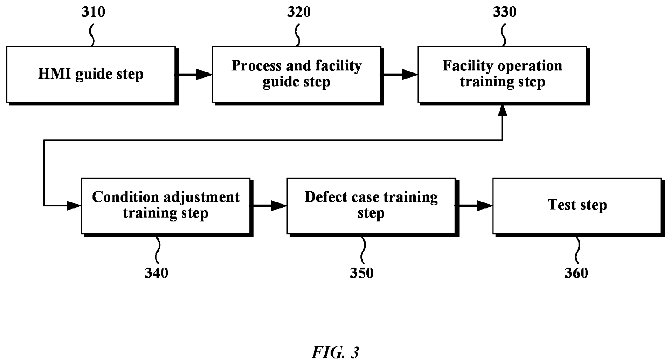

FIG. 3 is a block diagram illustrating an example in which a simulation apparatus 100 operates according to an embodiment of the present disclosure. As illustrated in the figure, the simulation apparatus (100 in FIG. 1) may operate through processes such as a HMI (Human-Machine Interface) guide step 310, a process and facility guide step 320, a facility operation training step 330, a condition adjustment training step 340, a defect case training step 350, and a test step 360. The simulation apparatus may operate further including, before the HMI guide step 310, a level test step for evaluating a current operation capability of an initial user. The user may be trained in a method of operating secondary battery production equipment through the steps 310, 320, 330, 340, 350, 360.

The HMI guide step 310 may be a step of learning types of various adjustment parameters included in the facility operating unit and a method of manipulating adjustment parameters. For example, a work specification and/or guide information indicating, for example, the types of adjustment parameters and a method of manipulating adjustment parameters may be displayed or output on the facility operating unit, the apparatus operating unit, and the like. Additionally, a portion of the screen may be turned on or activated so that the user may perform a task corresponding to the work specification and/or guide information. In this case, the user may be trained in how to use the facility operating unit by manipulating a condition and/or a value of an arbitrary adjustment parameter corresponding to the work specification and/or guide information. When the user touches a button for a predetermined time according to the work specification and/or guide information or enters a correct value corresponding to an arbitrary parameter, the next step may be performed, or a button that leads to the next step (e.g., NEXT button) may be displayed or activated.

The process and facility guide step 320 may be a step for describing secondary battery production processes or equipment. When the 3D model apparatus is a DSF&EOL apparatus, the process and facility guide step 320 may include a description of a loading process, a description of a cutting process, a description of a DSF (double side folding) process, a description of a taping process, a description of an EOL (characteristics inspection) process, a description of a visual inspection process, a description of a packaging process, and the like. Here, the cutting process may be a process of cutting a side wing of the cell pouch according to product specifications. The DSF process may be a process of folding the side wing of the cell pouch at 90 degrees, 180 degrees, and 270 degrees according to the product specifications, the taping process may be a process of attaching a tape to a cell side according to the product specifications to maintain the folding structure in the DSF process, the EOL process may be a process of determining good products and defective products according to the product specifications before shipment by measuring electrical and visual characteristics of the cell, the visual inspection process may be a process in which a vision equipment and/or an inspector for the visual inspection selects cells with poor appearance according to the product specifications, and the packaging process may be a process of loading cells determined as final good products on a shipping pallet. Insulation voltage measurement defects may be detected in the EOL process, full-width defects may be detected in the visual inspection process using the vision equipment, exterior crack defects may be detected in the visual inspection process by the inspector for the visual inspection, and cutting amount defects may be detected in a self-inspection between the DSF process and the EOL process; however, the present disclosure is not limited thereto.

The facility operation training step 330 may be a step in which a user learns how to operate the 3D DSF&EOL apparatus, including an operation preparation state checking step, a facility operating step, a facility operation stopping step, a cell data deleting step, an LOT exchanging step, a subsidiary material checking step, and the like. The guide information may be displayed or output on the 3D model apparatus according to the scenario of each training step, along with the type of adjustment parameter to be manipulated for operating, checking, and adjusting the 3D model apparatus and the value of the adjustment parameter. In other words, the guide information may be displayed or output on the facility operating unit and the apparatus operating unit, and a portion of the screen may be turned on or activated so that the user may perform a task corresponding to the guide information. In this case, the user may operate the facility operating unit and the apparatus operating unit corresponding to the guide information and input setting values; when one task is completed, the next step may be performed, or a button that leads to the next step (e.g., NEXT button) may be displayed or activated. Thus, the user may be trained in, for example, operating and stopping the facility, exchanging LOT, and the self-inspection in the facility operation training step of the DSF&EOL apparatus for secondary battery production based on the displayed information.

The condition adjustment training step 340 may be a step in which a user learns the quality change of a material produced by the 3D model apparatus according to the value of the adjustment parameter of the facility operating unit and the state of the apparatus operating unit. The condition adjustment training step 340 may be a step in which one of the material information related to the operation of the 3D DSF&EOL apparatus for the secondary battery production apparatus and the quality of a material produced by the 3D DSF&EOL apparatus may be changed to lie within an abnormal range, and the user checks the abnormal state and learns a method of correcting the abnormal state into a normal state. In other words, the condition adjustment training step 340 is a step in which the user learns how to check and take action on the defect that occurs during the operation of the secondary battery production apparatus, where a defect may occur in the 3D DSF&EOL apparatus, and at the occurrence of the defect, type of the adjustment parameter to be manipulated for resolving the defect, the value of the adjustment parameter, and equipment unit manipulation of the 3D model apparatus may be displayed or output. The user may deal with a defect based on the displayed information and learn a method of resolving the defect. For example, in the cutting amount defect training, the folding of the side wing may be changed to double fold (an additional fold between a 90-degree folding line and an end of the pouch), and in the full-width defect training, a distance between a cup line and a 270-degree folding line and/or a distance between a 180-degree folding line (the same as the 90-degree folding line) and the pouch end line may be changed to a certain abnormal range outside the upper limit or lower limit of the predetermined specification. In addition, in the case of the exterior crack defect training, it may be changed to add an exterior crack image to the 270-degree folding line, and in the case of the insulation voltage measurement defect, a state of the conductive rubber may be worn out or a position of the conductive rubber may move to a position in contact with a PP (Poly Propylene) layer of the cell pouch.

In the condition adjustment training step 340, the type of adjustment parameter that has to be manipulated to resolve the abnormal situation, the value of the adjustment parameter, and the guide information on the operation of the 3D model apparatus may be displayed or output on the facility operating unit and the apparatus operating unit; and a portion of the screen may be turned on or activated so that the user may perform a task corresponding to the information. In this case, the user may manipulate the facility operating unit and the apparatus operating unit corresponding to the guide information and input setting values; when one task is completed, the next step may be performed, or a button that leads to the next step (e.g., NEXT button) may be displayed or activated. Thus, the user may learn a method of correcting the abnormal range into a normal range based on the displayed information, and may learn parameter adjustment and user actions to operate the cutting unit, the folding unit, the insulation voltage measurement, and the like.

The defect case training step 350 may be a step in which a user repeatedly processes or resolves each defect scenario or a combination of a plurality of defect scenarios related to a secondary battery production apparatus to master a defect-solving method. For example, the user may directly select one defect scenario among a plurality of defect scenarios and be trained in the selected scenario, but the present disclosure is not limited to the operation; the user may be trained in a defect scenario determined randomly by the simulation apparatus. The defect case training step 350 may be a step in which the user learns to handle various defect scenarios for which the user has been trained in the condition adjustment training step 340. When a user manipulates a specific adjustment parameter or manipulates the 3D model apparatus to respond to a defect scenario given randomly, the operation of the 3D model apparatus and the quality of a material related to the 3D model apparatus may be changed in real-time. By checking the changed quality, the user may resolve the defect scenario through repeated training and improve the skill in coping with the defect.

The test step 360 may be a step of evaluating the operational capability of a user by testing the process through which the user resolves a defect scenario. For example, when a user resolves each defect scenario, the operational capability of the user may be measured or evaluated based on, for example, a progress time and a loss value for each defect scenario. The user may additionally learn or be trained for an incomplete defect scenario by checking the operational capability and whether the user has passed the test. In such a case, the test step 360 may additionally determine the degree of improvement of the user's skill level by comparing it with a performance evaluation score measured in the user's level test step.

Although FIG. 3 assumes that each step is sequentially performed, the present disclosure is not limited to the assumption, and some of the steps may be omitted. In addition, the order of performing the steps may be changed and may be repeated. For example, after the testing step 360, the defect case training step 350 may be performed again. Based on the configuration, the user may easily learn how to operate the secondary battery production apparatus through the simulation progressed step by step according to the user's task skill.

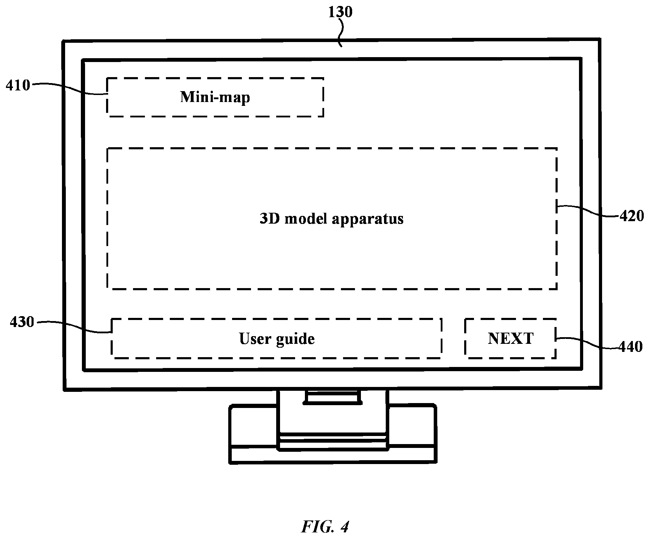

FIG. 4 illustrates an example of a display screen displayed or output on an apparatus operating unit 130 according to an embodiment of the present disclosure. As illustrated in the figure, the apparatus operating unit 130 may display or output text, an image, and a video including a mini-map 410, a 3D model apparatus 420, a user guide 430, and a NEXT button 440 on the display screen. FIG. 4 assumes that the mini-map 410, the 3D model apparatus 420, the user guide 430, and the NEXT button 440 are displayed in a specific area on the display screen, but the present disclosure is not limited to the assumption; each of the text, image, and video may be displayed in an arbitrary area of the display screen.

The mini-map 410 briefly displays the entire DSF&EOL apparatus for secondary battery production, and the approximate position of the area displayed on the 3D model apparatus 420 out of the entire DSF&EOL apparatus is displayed as a rectangular box. When the apparatus displayed on the 3D model apparatus 420 is changed, the position and size of the rectangular box displayed on the mini-map 410 may also be changed in real-time. For example, the mini-map 410 may perform the function of a position guide map of the DSF&EOL apparatus.

The 3D model apparatus 420 may be a 3D image or video that implements the secondary battery production equipment in a 3D form. The 3D model apparatus 420 may operate based on the user condition information and/or user action information input from a user.

The user guide 430 may be the information for guiding a user's next action, which includes information necessary to operate the 3D model apparatus 420, condition information and action information required to solve a defect scenario, and so on. In other words, even when the user does not know how to operate the simulation apparatus, the user may be trained in a method of operating the simulation apparatus and a method of dealing with a defect using the user guide 430.

When the condition value or setting value of the 3D model apparatus is determined or the 3D model apparatus 420 is operated using the displayed user guide 430, the corresponding step is resolved, and the NEXT button 440 for proceeding to the next step may be activated. The user may select the activated NEXT button 440 through, for example, a touch input to perform training corresponding to the next step.

Although not illustrated, the work specification which is a document containing initial setting values and condition values of the 3D model apparatus 420 may be further displayed on the apparatus operating unit 130. The work specification may be predetermined or generated by a particular algorithm. For example, the simulation apparatus may receive and provide the contents of the work specification used to operate actual secondary battery production equipment or generate a new work specification by calculating the initial setting values and condition values of the 3D model apparatus 420 based on a plurality of input work specifications. Here, the 3D model apparatus 420 may be three-dimensional image, video, or the like that implements the secondary battery production equipment in a 3D form. In the apparatus operating unit 130, the results of self-inspection and quality check may be further displayed in a pop-up form, and if necessary, a toolbar including various tool icons (e.g., steel ruler and tape) for operating the 3D model apparatus may be additionally displayed.

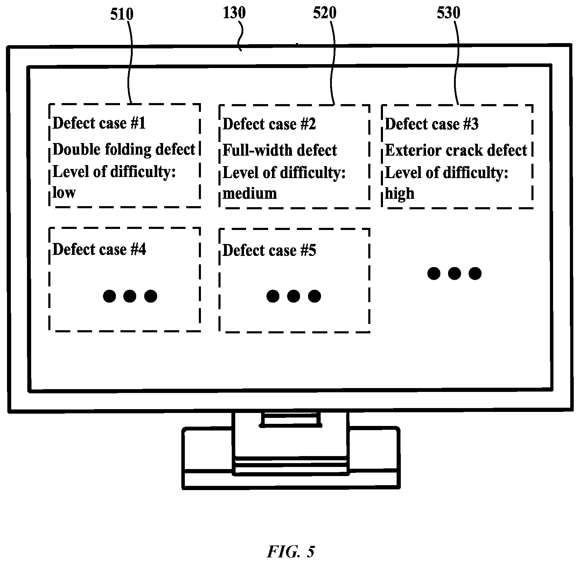

FIG. 5 illustrates an example of a display screen displayed or output on an apparatus operating unit 130 according to another embodiment of the present disclosure. As illustrated in the figure, the apparatus operating unit 130 may display or output text, an image, or a video including a plurality of defect scenarios 510, 520, 530 on the display screen. FIG. 5 assumes that a first defect scenario 510, a second defect scenario 520, and a third defect scenario 530 are displayed in specific areas on the display screen, but the present disclosure is not limited to the assumption; each text, image, or video may be displayed in any position on the display screen.

According to an embodiment, each defect scenario may include details and the level of difficulty of the defect scenario. For example, the first defect scenario 510 may be a double folding defect with a low level of difficulty, the second defect scenario 520 may be a full-width defect with a medium level of difficulty, and the third defect scenario 530 may be an exterior crack defect with a high level of difficulty. A user may select at least a part of the plurality of defect scenarios 510, 520, 530 displayed on the display screen through a touch input to perform training based on the selected defect scenario.

Additionally or alternatively, one defect scenario among the plurality of defect scenarios 510, 520, 530 may be determined by a predetermined algorithm. For example, through a user account (or information related to the user account) of a user performing training, the simulation apparatus may determine a defect scenario for which the user is not fully skilled or a combination of defect scenarios. Here, the user's work skill level may be calculated or determined as a test result for each defect scenario, but the present disclosure is not limited to the specific scheme. Based on the configuration, the user may easily identify and process a defect scenario for which the user lacks training; thus, the user may be trained only in the defect scenario for which the user has low work skills.

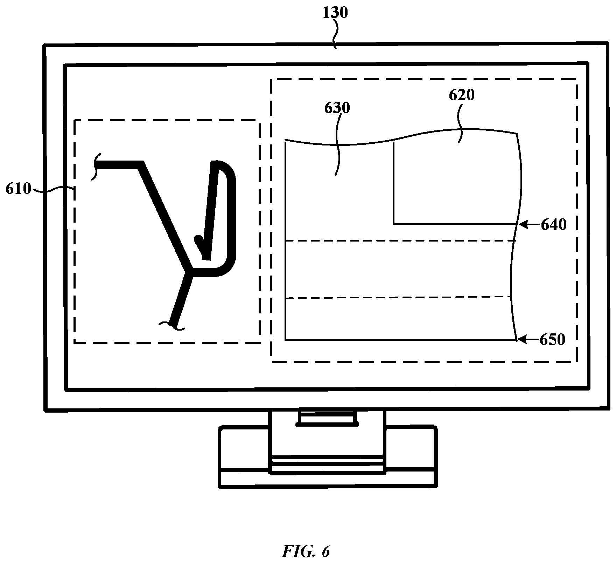

FIG. 6 illustrates an example in which a cutting amount defect scenario has occurred according to an embodiment of the present disclosure. The simulation apparatus (100 of FIG. 1) may determine one or more defect scenarios among a plurality of defect scenarios related to a malfunction of the 3D DSF&EOL and, based on the determined one or more defect scenarios, may change at least one of the operation of the 3D DSF&EOL or the quality information related to the quality of the material. Here, the plurality of defect scenarios may include a cutting amount defect scenario. For example, the cutting amount defect scenario may refer to a scenario in which additional folding occurs between the 90-degree folding position and the pouch end because the distance between the cup and the pouch end is greater than the upper limit of the predetermined specification. According to an embodiment, when the determined one or more defect scenarios include a cutting amount defect scenario, images, videos, and animations such as dots, lines, and planes indicating the double folding state of a material 610 produced by the 3D DSF&EOL included in the apparatus operating unit 130 may be changed to a predetermined area.

In the case of such a cutting amount defect scenario, the apparatus operating unit 130 generates an alarm, and guides the user to check the quality and adjust the cutting amount. The user may respond to the cutting amount defect scenario by touching or dragging a specific area of the 3D DSF&EOL displayed on the apparatus operating unit 130. In other words, the simulation apparatus may receive, from the user, user action information touching or dragging at least a part of the area corresponding to the quality check of the 3D DSF&EOL apparatus to execute an animation of unfolding a side wing 630 of a cell 620 and output or display a cup line, a 270-degree folding line, a 90-degree folding line, and a pouch end line on the unfolded side wing. The user may measure a distanced spacing of, for example, a cup line 640, a 90-degree folding line, a 270-degree folding line, a pouch end line 650, and the like using a steel ruler in the tool bar, and may determine a defective portion based on this. That is, by receiving the user action information measuring the spacing between the cup line 640 and the pouch end line 650, the cutting amount defect may be determined.

In addition, when it is determined that the cutting amount defect has occurred, the user may change a cutting reference point by adjusting a y-axis position value parameter of the cutting unit of the facility operating unit. When adjustment of the equipment unit is required, the cutting amount defect may be dealt with by touching or dragging a specific area of the 3D DSF&EOL apparatus displayed on the apparatus operating unit 130. In other words, the simulation apparatus may correct an amount of material cut in response to receiving the user condition information corresponding to the y-axis position value parameter of the cutting unit from the user. Optionally or alternatively, the simulation apparatus may normally correct the changed cutting amount in response to receiving, from the user, the user action information touching or dragging a specific equipment unit area to resolve the cutting amount defect.

Then, the simulation apparatus may determine whether the double-folding phenomenon of the material has been resolved based on the corrected cutting amount. For example, when at least one of the user action information or the user condition information is generated based on a touch input or a drag input to a predetermined area in a predetermined order that may be used at the time of resolving the cutting amount defect scenario, or a predetermined parameter setting value is input; then, the simulation apparatus may determine that the cutting amount defect scenario has been resolved. In other words, when the cutting amount is corrected based on at least one of the corresponding user action information or user condition information, the simulation apparatus may determine that the cutting amount defect scenario has been resolved. When it is determined that the defect scenario has been resolved, the folding state of the cell side wing, e.g., the double-folding state, may be resolved and may be corrected normally.

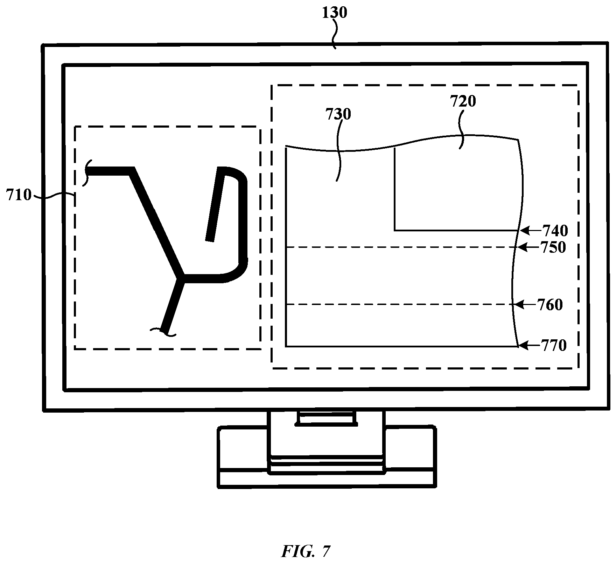

FIG. 7 illustrates an example in which a full-width defect scenario has occurred according to an embodiment of the present disclosure. The simulation apparatus (100 of FIG. 1) may determine one or more defect scenarios among a plurality of defect scenarios related to a malfunction of the 3D DSF&EOL and, based on the determined one or more defect scenarios, may change at least one of the operation of the 3D DSF&EOL or the quality information related to the quality of the material. Here, the plurality of defect scenarios may include a full-width defect scenario. For example, the full-width defect scenario may refer to a defect in which a total length of a width of a cell is greater than or less than the upper limit of the predetermined specification, where the full-width defect is usually caused by a 270-degree folding defect, and optionally, a 90-degree folding defect may additionally occur in the case of the full width defect. According to an embodiment, when the determined one or more defect scenarios include a full-width defect scenario, images, videos, and animations such as dots, lines, and planes indicating the double folding state of the material 710 produced by the 3D DSF&EOL included in the apparatus operating unit 130 may be changed to a predetermined area.

In the case of such a full-width defect scenario, the apparatus operating unit 130 generates an alarm, and guides the user to check the quality and adjust the 90-degree folding position and/or the 270-degree folding position. The user may respond to the full-width defect scenario by touching or dragging a specific area of the 3D DSF&EOL displayed on the apparatus operating unit 130. In other words, the simulation apparatus may receive, from the user, the user action information touching or dragging at least a part of the area corresponding to the quality check of the 3D DSF&EOL apparatus, and may identify a defect state (whether only a 270-degree folding defect has occurred or both of a 90-degree folding defect and a 270-degree folding defect have occurred). For example, the simulation apparatus may receive, from the user, user action information touching or dragging at least a part of the area corresponding to the quality check of the 3D DSF&EOL apparatus to execute an animation of unfolding a side wing 730 of a cell 720 and output or display a cup line 740, a 270-degree folding line 750, a 90-degree folding line 760, and a pouch end line 770 on the unfolded side wing. The user may measure a distanced spacing of, for example, the cup line 740, the 270-degree folding line 750, the 90-degree folding line 760, and the pouch end line 770 using a steel ruler in the tool bar, and may determine a defective portion based on this. That is, when the spacing between the cup line 740 and the 270-degree folding line 750 is greater than the upper limit or less than the lower limit of the predetermined specification, it may be determined as a 270-degree folding defect, and additionally, when the spacing between the 90-degree folding line 760 and the pouch end line 770 is greater than the upper limit or less than the lower limit of the predetermined specification, it may be determined as a 90-degree folding defect.

In addition, when it is determined that the full-width defect has occurred, the user may change a cutting reference point by adjusting only a y-axis position value parameter of the 270-degree folding unit of the facility operating unit or both of the y-axis position value parameter of the 270-degree folding unit and a y-axis position value parameter of the 90-degree folding unit, depending on whether only the 270-degree folding defect has occurred or the 90-degree folding defect has also occurred. When adjustment of the equipment unit is required, it is possible to respond to each full-width defect by touching or dragging a specific area of the 3D DSF&EOL apparatus displayed on the apparatus operating unit 130. In other words, the simulation apparatus may correct the 270-degree folding position and/or the 90-degree folding position of the material in response to receiving, from the user, user condition information corresponding to the y-axis position value parameter of the folding unit. Optionally or alternatively, the simulation apparatus may normally correct the changed folding line in response to receiving, from the user, user action information touching or dragging a specific equipment unit area for resolving the full-width defect (folding defect).

Then, the simulation apparatus may determine whether the full-width defect of the material has been resolved based on the corrected folding line. For example, when at least one of the user action information or the user condition information is generated based on a touch input or a drag input to a predetermined area in a predetermined order that may be used at the time of resolving the full-width defect scenario, or a predetermined parameter setting value is input; then, the simulation apparatus may determine that the full-width defect scenario has been resolved. In other words, when the full width of the cell is corrected based on at least one of the corresponding user action information or user condition information, the simulation apparatus may determine that the full-width defect scenario has been resolved. When it is determined that the defect scenario has been resolved, the full width of the cell may be corrected normally.

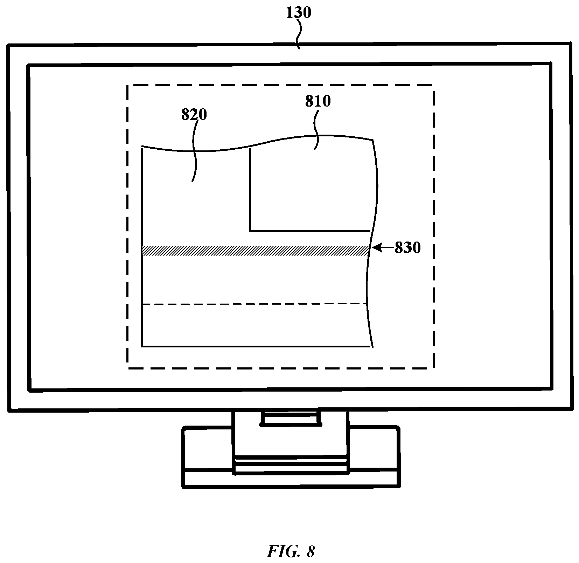

FIG. 8 illustrates an example in which an exterior crack defect scenario has occurred according to an embodiment of the present disclosure. The simulation apparatus (100 of FIG. 1) may determine one or more defect scenarios among a plurality of defect scenarios related to a malfunction of the 3D DSF&EOL and, based on the determined one or more defect scenarios, may change at least one of the operation of the 3D DSF&EOL or the quality information related to the quality of the material. Here, the plurality of defect scenarios may include an exterior crack defect scenario. For example, the exterior crack defect scenario may refer to a defect in which a crack is generated in the exterior cell, and it may occur when a gap between upper and lower folding knives constituting the 270-degree folding unit is less than the lower limit of the predetermined specification. According to an embodiment, when the determined one or more defect scenarios include an exterior crack defect scenario, the simulation apparatus may change images, videos, and animations such as dots, lines, and planes indicating the double folding state of a material 810 produced by the 3D DSF&EOL included in the apparatus operating unit 130 to a predetermined area.

In the case of such an exterior crack defect scenario, the apparatus operating unit 130 generates an alarm, and guides the user to check the quality and adjust the gap between the upper and lower folding knives of the 270-degree folding unit. The user may respond to the exterior crack defect scenario by touching or dragging a specific area of the 3D DSF&EOL displayed on the apparatus operating unit 130. In other words, the simulation apparatus may receive, from the user, user action information touching or dragging at least a part of the area corresponding to the quality check of the 3D DSF&EOL apparatus, and identify the cause of the defect. For example, a side wing 820 of a cell 810 is unfolded, and the cause of the defect may be determined based on, for example, a crack image formed on a 270-degree folding line 830. That is, when a crack has been generated in the 270-degree folding line 830, it may be determined that the exterior crack defect according to an insertion depth of the 270-degree folding knife has occurred.

When it is determined that the exterior crack defect has occurred, the insertion depth of the folding knife may be changed by adjusting a z-axis position value parameter of the upper and lower folding knives constituting the 270-degree folding unit. When adjustment of the equipment unit is required, it is possible to respond to each exterior crack defect by touching or dragging a specific area of the 3D DSF&EOL apparatus displayed on the apparatus operating unit 130. In other words, the simulation apparatus may correct the z-axis insertion depth of the 270-degree folding unit of the material in response to receiving, from the user, user condition information corresponding to the z-axis position value parameter of the 270-degree folding unit. Optionally or alternatively, the simulation apparatus may normally correct the z-axis insertion depth of the 270-degree folding unit in response to receiving, from the user, user action information touching or dragging a specific equipment unit area for resolving the exterior crack defect.

Then, the simulation apparatus may determine whether the exterior crack defect of the material has been resolved based on the z-axis insertion depth of the 270-degree folding unit. For example, when at least one of the user action information or the user condition information is generated based on a touch input or a drag input to a predetermined area in a predetermined order that may be used at the time of resolving the exterior crack defect scenario, or a predetermined parameter setting value is input; then, the simulation apparatus may determine that the exterior crack defect scenario has been resolved. In other words, when the exterior crack is corrected based on at least one of the corresponding user action information or user condition information, the simulation apparatus may determine that the exterior crack defect scenario has been resolved. When it is determined that the defect scenario has been resolved, the crack image may be deleted from the appearance of the cell.

The simulation apparatus (100 of FIG. 1) may determine one or more defect scenarios among a plurality of defect scenarios related to a malfunction of the 3D DSF&EOL during the condition adjustment training and the defect case training and, based on the determined one or more defect scenarios, may change at least one of the operation of the 3D DSF&EOL or the quality information related to the quality of the material. Here, the plurality of defect scenarios may include an insulation voltage measurement defect scenario. The insulation voltage measurement defect scenario may refer to a defect in which an insulation voltage is not measured due to poor contact between a conductive rubber and a contact point of the pouch or lead, when measuring the insulation voltage in the EOL process. According to an embodiment, when the determined one or more defect scenarios include an insulation voltage measurement defect scenario, the simulation apparatus may change images, videos, and animations such as dots, lines, and planes indicating elements of the 3D DSF&EOL included in the apparatus operating unit 130 to a predetermined area. That is, the images, videos, and animations such as dots, lines, and planes indicating the conductive rubber may be switched to a worn image, or to a contact point (a protrusion of a PP (Poly Propylene) layer) between the conductive rubber and the pouch or lead.

In the case of such an insulation voltage measurement defect scenario, the apparatus operating unit 130 generates an alarm, and guides the user to check the quality and replace the conductive rubber or move the position of the conductive rubber. That is, the user may respond to the insulation voltage measurement defect scenario by touching or dragging a specific area of the 3D DSF&EOL displayed on the apparatus operating unit 130. In other words, the simulation apparatus may receive, from the user, user action information touching or dragging at least a part of the area corresponding to the quality check of the 3D DSF&EOL apparatus, and may identify the cause of the defect. For example, the causes of poor contact may include wear of conductive rubber, breakage of a linopin spring, breakage of a cable, and location of the conductive rubber on the protrusion of the pouch PP (Poly Propylene) layer, and the user may touch, drag or observe the 3D DSF&EOL device to determine the cause of poor contact.

When it is determined that the poor contact has occurred due to the conductive rubber wear, training of removing the worn conductive rubber and installing a new conductive rubber may be carried out, and when it is determined that the poor contact has occurred due to the conductive rubber located on the protrusion of the pouch PP (Poly Propylene) layer, training of changing the location of the conductive rubber from the protrusion of the pouch PP (Poly Propylene) layer to another location. The simulation apparatus may correct the contact position between the conductive rubber and the pouch or lead of the cell in response to receiving, from the user, a series of user action information touching or dragging a specific equipment unit area to resolve the insulation voltage measurement defect. Optionally or alternatively, the simulation apparatus may receive user condition information corresponding to the insulation voltage measurement defect and correct the contact defect between the conductive rubber and the pouch or lead of the cell.

Then, the simulation apparatus may determine whether the insulation voltage measurement defect has been resolved based on the corrected contact state between the conductive rubber and the pouch or lead of the cell. For example, when at least one of the user action information or the user condition information is generated based on a touch input or a drag input to a predetermined area in a predetermined order that may be used at the time of resolving the insulation voltage measurement defect scenario, or a predetermined parameter setting value is input; then, the simulation apparatus may determine that the insulation voltage measurement defect scenario has been resolved. In other words, when the contact defect is corrected based on at least one of the corresponding user action information or user condition information, the simulation apparatus may determine that the insulation voltage measurement defect scenario has been resolved. When it is determined that the defect scenario has been resolved, the normally measured insulation voltage value of the cell may be obtained.

Although it is illustrated in FIGS. 6 to 8 that an image, a video, and/or an animation indicating part of the 3D DSF&EOL is displayed on the apparatus operating unit 130, but the present disclosure is not limited thereto, and the apparatus operating unit 130 may include images, videos and/or animations of the same shape as the actual DSF&EOL. With such a configuration, the user may effectively learn in advance how to respond to problems that may occur in the DSF&EOL process, and the simulation apparatus may effectively determine whether the problem has been solved based on the input or received user actions.

In the above example, it has been described that there may be a cutting amount defect scenario, a full-width defect scenario, an exterior crack defect scenario, an insulation voltage measurement defect scenario, and the like, but the plurality of defect scenarios may further include other defect scenarios that may occur in the DSF&EOL. In addition, the above-described cutting amount defect scenario, full-width defect scenario, exterior crack defect scenario, and insulation voltage measurement defect scenario may individually occur, or two or more defect scenarios may occur in combination.

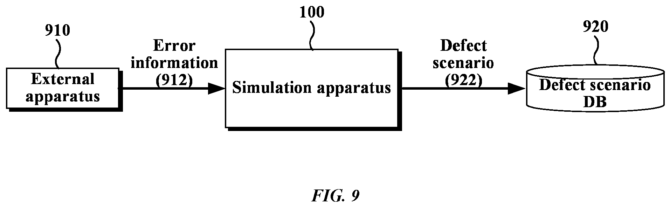

FIG. 9 illustrates an example in which a defect scenario 922 is generated according to an embodiment of the present disclosure. As illustrated in the figure, the simulation apparatus 90 may communicate with an external device (e.g., secondary battery production equipment) 910 and a defect scenario DB 920 and exchange data and/or information required for generating the defect scenario 922.

According to an embodiment, when a malfunction occurs in an external device 910, the simulation apparatus 90 may receive or obtain error information 912 related to the malfunction from the external device 910. Here, the error information 912 may include operation information of the external device 910 when the malfunction occurs and the quality change level of a material produced by the external device 910. In this case, the simulation apparatus 90 may determine condition values and setting values of a 3D model apparatus (e.g., a 3D DSF&EOL apparatus) and/or each quality parameter value of the quality information and generate a defect scenario 922 having the condition values and the setting values of the determined 3D model apparatus and/or the quality parameter values to respond to the corresponding error information 912. The generated defect scenario 922 may be stored and managed in the defect scenario DB 920. For example, the simulation apparatus 90 may determine condition values and setting values of a 3D model apparatus and/or each quality parameter value of the quality information and generate a defect scenario 922 to respond to the error information 912 by using an arbitrary algorithm for generating a defect scenario 922 and/or a trained machine learning model.

According to an embodiment, the processor may convert the operation information of the external device 910 into a first set of parameters related to the operation of the 3D model apparatus and convert the quality change level of a material produced by the external device 910 into a second set of parameters related to the quality information related to the quality of a material produced by the 3D model apparatus. Then, the processor may determine the category of a malfunction occurring in the external device 910 using the converted first set of parameters and second set of parameters and generate a defect scenario based on the determined category, the first set of parameters, and the second set of parameters.

FIG. 9 assumes that a defect scenario occurs when a malfunction occurs in the external apparatus 910, but the present disclosure is not limited to the assumption; for example, a defect scenario may be predetermined by an arbitrary user. In another example, a defect scenario may be generated by randomly determining setting values, condition values, and quality information related to the 3D model apparatus within a predetermined, abnormal range. Based on the configuration above, a user may be trained using a defect scenario generated based on a malfunction occurring in actual work environments, thereby effectively improving the ability to respond to defects.

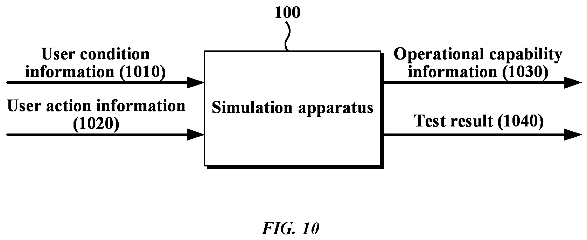

FIG. 10 illustrates an example in which operational capability information 1030 and a test result 1040 are generated according to an embodiment of the present disclosure. As described above, when a defect scenario occurs, the simulation apparatus 90 may receive user condition information 1010 and user action information 1020 from a user and, based on the received user condition information 1010 and user action information 1020, determine whether the defect scenario has been resolved.

According to an embodiment, when it is determined that a defect scenario has been resolved, the simulation apparatus 90 may calculate a progress time and a loss value of the defect scenario while the defect scenario is in progress and, based on the calculated progress time and loss value, generate the operational capability information 1030 for the 3D model apparatus of a user account. In this case, a test result 1040 may be output together with the operational capability information 1030. For example, a user related to the corresponding user account may take a test for an arbitrary defect scenario, and when all defect scenarios related to a specific 3D model apparatus are resolved according to a predetermined criterion, the simulation apparatus 90 may determine that the corresponding user has passed a simulation test for the specific 3D model apparatus.

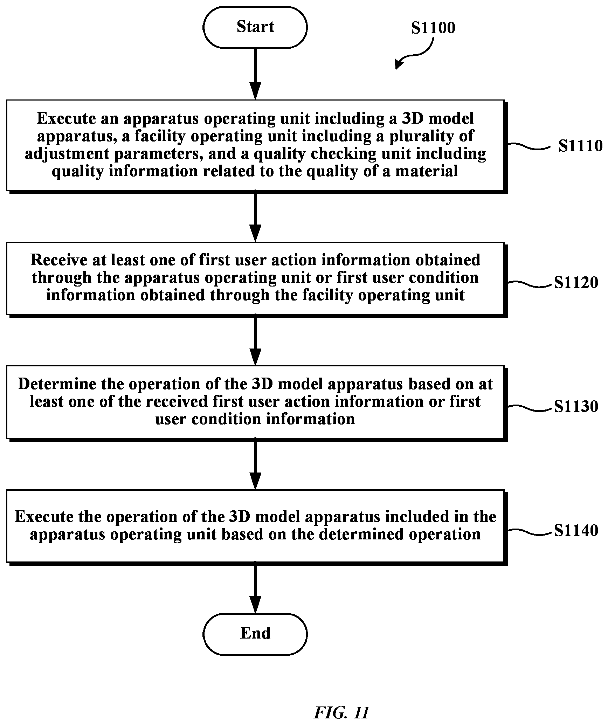

FIG. 11 illustrates an example of a simulation method S1100 for secondary battery production according to an embodiment of the present disclosure. The simulation method S1100 for secondary battery production may be performed by a processor (e.g., at least one processor of a simulation apparatus). As illustrated in the figure, the simulation method S1100 for secondary battery production may be initiated as the processor executes an apparatus operating unit including a 3D model apparatus related to secondary battery production, a facility operating unit including a plurality of adjustment parameters for determining the operation of the 3D model apparatus, and a quality checking unit including quality information related to the quality of a material produced by the 3D model apparatus S1110.

The processor may obtain at least one of first user action information obtained through the apparatus operating unit or first user condition information obtained through the facility operating unit S1120. Here, the first user condition information may include information related to a value corresponding to at least one adjustment parameter among a plurality of adjustment parameters.

The processor may determine the operation of the 3D model apparatus based on at least one of the first user action information or the first user condition information obtained S1130. In addition, the processor may execute the operation of the 3D model apparatus included in the apparatus operating unit based on the determined operation S1140. When receiving the first user action information, the processor may determine whether the received first user action information corresponds to a predetermined operating condition of the 3D model apparatus and approve the operation of the 3D model apparatus when it is determined that the first user action information corresponds to the predetermined operating condition of the 3D model apparatus.

According to an embodiment, the processor may determine one or more quality parameters for determining the quality of a material produced by the 3D model apparatus and, while the operation of the 3D model apparatus is being executed, calculate a value corresponding to each of the determined one or more quality parameters based on the operation of the 3D model apparatus in execution. In addition, the processor may generate quality information related to the quality of a material produced by the 3D model apparatus based on the calculated value corresponding to each of the one or more quality parameters.

According to an embodiment, the processor may determine one or more defect scenarios among a plurality of defect scenarios related to a malfunction of the 3D model apparatus and change at least one of the 3D model apparatus's operation or quality information related to the quality of a material based on the determined one or more defect scenarios. Then, the processor may receive at least one of second user action information or second user condition information for resolving the determined one or more defect scenarios and, based on at least one of the received second user action information or second user condition information, correct the changed operation of the 3D model apparatus. In addition, while the corrected operation of the 3D model apparatus is executed, the processor may calculate a value corresponding to each of a plurality of quality parameters related to the quality of a material produced by the 3D model apparatus based on the operation of the 3D model apparatus in execution. In this case, the processor may correct the quality information related to the quality of a material produced by the corrected 3D model apparatus based on the calculated value corresponding to each of the plurality of quality parameters and, by using the corrected quality information, determine whether one or more defect scenarios have been resolved.

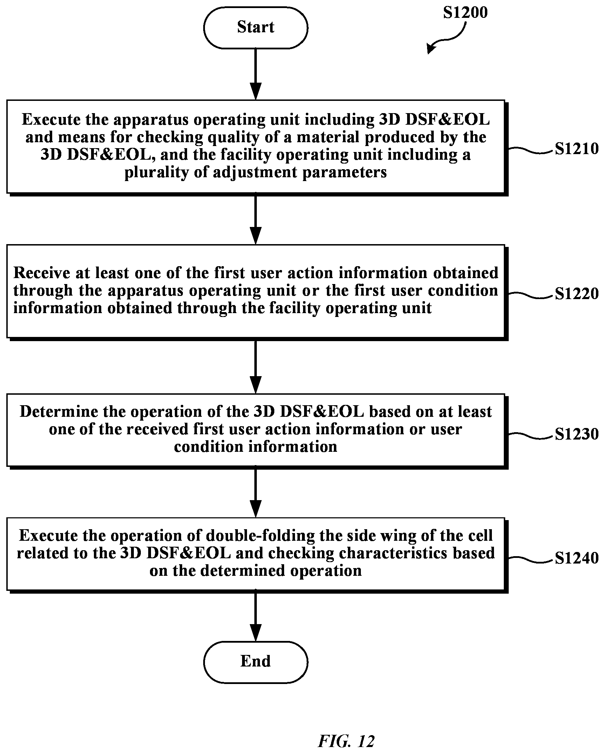

FIG. 12 illustrates an example of a simulation method S1200 of a DSF&EOL apparatus for secondary battery production according to an embodiment of the present disclosure. The simulation method S1200 of DSF&EOL for secondary battery production may be performed by a processor (e.g., at least one processor of a simulation apparatus). As illustrated in the figure, the simulation method S1200 of a DSF&EOL for secondary battery production may be initiated as the processor executes the apparatus operating unit including a 3D DSF&EOL related to the production of secondary batteries and a means for checking the quality of a material produced by the 3D DSF&EOL, and the facility operating unit including a plurality of adjustment parameters for determining the operation of the 3D DSF&EOL S1210.

The processor may obtain at least one of first user action information obtained through the apparatus operating unit or first user condition information obtained through the facility operating unit S1220. In addition, the processor may determine the operation of the 3D DSF&EOL based on at least one of the obtained first user action information or first user condition information S1230. In addition, the processor may execute the operation of double folding the side wing of the cell related to the 3D DSF&EOL based on the determined operation S1240. Here, the operation of operating the 3D DSF&EOL may include an operation preparation state checking step, a facility operating step, a facility operation stopping step, a cell data deleting step, a LOT exchanging step, a subsidiary material checking step, and the like.

According to an embodiment, the processor may change the adjustment parameter displayed on the facility operating unit based on the first user action information. In addition, when the processor receives the first user action information or the first user condition information, and it is determined that the received first user action information or the first user condition information correspond to a predetermined user action and user condition input, the process may permit operation of the 3D DSF&EOL.

In addition, the processor may determine one or more quality parameters for determining the quality of a material produced by the 3D DSF&EOL and, while the operation of the 3D DSF&EOL is being executed, calculate a value corresponding to each of the determined one or more quality parameters based on the operation of the 3D DSF&EOL in execution. In addition, the processor may generate quality information related to the quality of a material produced by the 3D DSF&EOL based on the calculated value corresponding to each of the one or more quality parameters.

According to an embodiment, the processor may determine one or more defect scenarios among a plurality of defect scenarios related to a malfunction of the 3D DSF&EOL and change at least one of the operation of 3D DSF&EOL or quality information related to the quality of a material based on the determined one or more defect scenarios. For example, the plurality of defect scenarios may include a cutting amount defect scenario, a full-width defect scenario, an exterior crack defect scenario, and an insulation voltage measurement defect scenario. In this case, each defect scenario may be resolved by arbitrary user condition information and user action information input from a user.

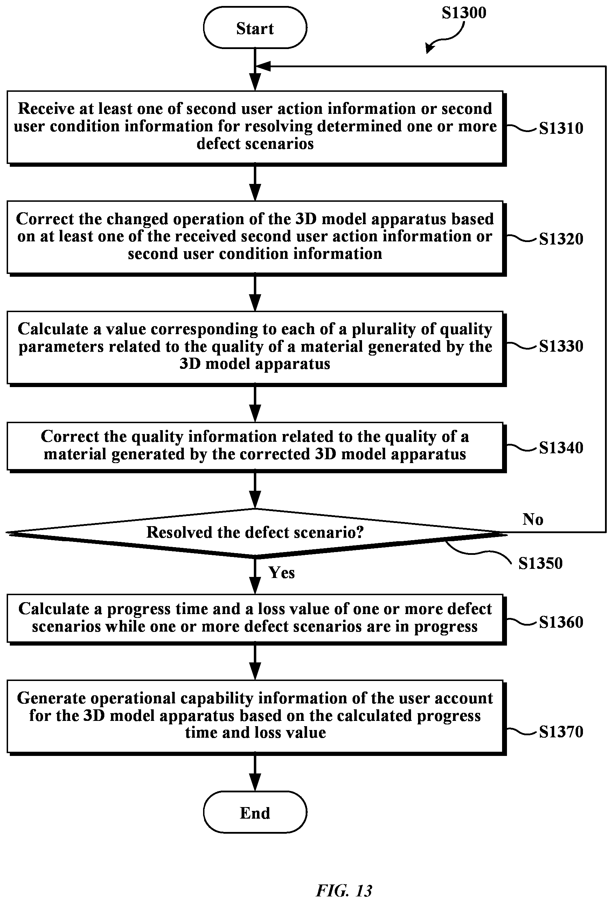

FIG. 13 illustrates an example of a method of calculating a test result S1300 according to an embodiment of the present disclosure. The method of calculating a test result S1300 may be performed by a processor (e.g., at least one processor of a simulation apparatus). As illustrated in the figure, the method of calculating a test result S1300 may be initiated as the processor receives at least one of second user action information or second user condition information for resolving determined one or more defect scenarios S1310.

As described above, the processor may correct the changed operation of the 3D model apparatus based on at least one of the received second user action information or second user condition information S1320. In addition, while the corrected operation of the 3D model apparatus is executed, the processor may calculate a value corresponding to each of a plurality of quality parameters related to the quality of a material produced by the 3D model apparatus based on the operation of the 3D model apparatus in execution S1330. In this case, the processor may correct the quality information related to the quality of a material produced by the corrected 3D model apparatus based on the calculated value corresponding to each of the plurality of quality parameters S1340.

Then, the processor may determine whether one or more defect scenarios have been resolved using the corrected quality information and/or the setting values and condition values of the 3D model apparatus S1350. When it is determined that the defect scenario has not been resolved, the processor may again generate or obtain the second user action information and the second user condition information using the information input by the user.

When it is determined that one or more defect scenarios have been resolved, the processor may calculate a progress time and a loss value of one or more defect scenarios while one or more defect scenarios are in progress S1360. In addition, based on the calculated progress time and loss value, the processor may generate operational capability information of the user account for the 3D model apparatus S1370. Here, the operational capability information may include, but is not limited to, a progress speed and accuracy calculated using a progress time and a loss value, and may further include the user's test score and whether the user has passed the test. In this case, one user account may be assigned to each user performing secondary battery production; the operational capability information generated based on the user's progress time for a defect scenario and a loss value may be stored or managed in conjunction with the user account.

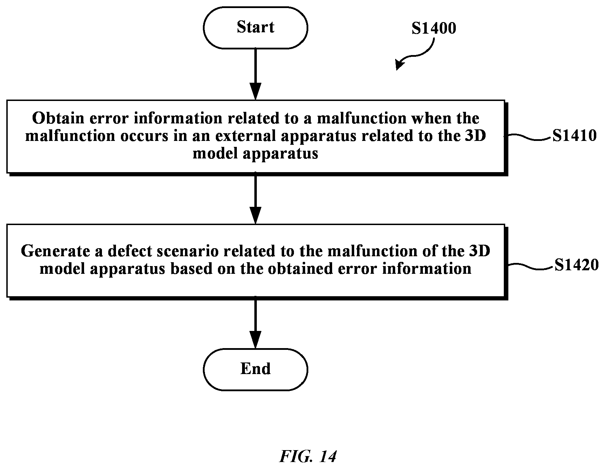

FIG. 14 illustrates an example of a method of generating a defect scenario S1400 according to an embodiment of the present disclosure. The method of generating a defect scenario S1400 may be performed by a processor (e.g., at least one processor of a simulation apparatus). As illustrated in the figure, the method of generating a defect scenario S1400 may be initiated as the processor obtains error information related to a malfunction when the malfunction occurs in an external apparatus related to the 3D model apparatus S1410.

The processor may generate a defect scenario related to a malfunction of the 3D model apparatus based on the obtained error information S1420. Here, the error information may include each adjustment parameter value and setting values of actual secondary battery production equipment related to the 3D model apparatus, obtained when the corresponding production equipment malfunctions. For example, when the quality of a material produced by secondary battery production equipment gets out of a predetermined normal range, it may be determined that a malfunction has occurred; when it is determined that a malfunction has occurred, the processor may obtain error information related to the malfunction and generate a defect scenario related to the malfunction of the 3D model apparatus based on the obtained error information.

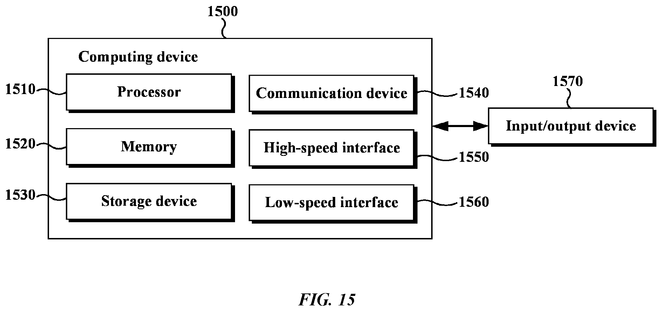

FIG. 15 illustrates an exemplary computing device 1500 for performing the method and/or embodiments. According to an embodiment, the computing device 1500 may be implemented using hardware and/or software configured to interact with a user. Here, the computing device 1500 may include the simulation apparatus (100 of FIG. 1). For example, the computing device 1500 may be configured to support virtual reality (VR), augmented reality (AR), or mixed reality (MR) environments but is not limited thereto. The computing device 1500 may include a laptop computer, a desktop computer, a workstation, a personal digital assistant, a server, a blade server, and a mainframe computer, which is not limited thereto. The constituting elements of the computing device 1500 and connection relationships and functions of the constituting elements are intended to be illustrative and not intended to limit the implementations of the present disclosure described and/or claimed herein.

The computing device 1500 includes a processor 1510, a memory 1520, a storage device 1530, a communication device 1540, a high-speed interface 1550 connected to the memory 1520 and a high-speed expansion port, and a low-speed interface 1560 connected to a low-speed bus and a low-speed storage device. Each of the constituting elements 1510, 1520, 1530, 1540, 1550, 1560 may be interconnected using a variety of buses, mounted on the same main board, or mounted and connected in other suitable ways. The processor 1510 may be configured to process instructions of a computer program by performing basic arithmetic, logic, and input/output operations. For example, the processor 1510 may process instructions stored in the memory 1520 and the storage device 1530 and/or instructions executed within the computing device 1500 and display graphic information on an external input/output device 1570 such as a display device combined with the high-speed interface 1550.

The communication device 1540 may provide a configuration or a function for the input/output device 1570 and the computing device 1500 to communicate with each other through a network and provide a configuration or a function to support the input/output device 1570 and/or the computing device 1500 to communicate with another external apparatus. For example, a request or data generated by the processor of the external apparatus according to an arbitrary program code may be transmitted to the computing device 1500 through a network under the control of the communication device 1540. Conversely, a control signal or a command provided under the control of the processor 1510 of the computing device 1500 may be transmitted to another external device through the communication device 1540 and a network.

FIG. 15 assumes that the computing device 1500 includes one processor 1510 and one memory 1520, but the present disclosure is not limited to the assumption; the computing device 1500 may be implemented using a plurality of memories, a plurality of processors, and/or a plurality of buses. In addition, although FIG. 15 assumes that one computing device 1500 is employed, the present disclosure is not limited to the assumption, and a plurality of computing devices may interact with each other and perform operations required to execute the method described above.

The memory 1520 may store information in the computing device 1500. According to an embodiment, the memory 1520 may include a volatile memory unit or a plurality of memory units. Additionally or alternatively, the memory 1520 may be composed of a non-volatile memory unit or a plurality of memory units. In addition, the memory 1520 may be implemented using a different type of computer-readable medium, such as a magnetic disc or an optical disc. In addition, an operating system and at least one program code and/or instruction may be stored in the memory 1520.

The storage device 1530 may be one or more mass storage devices for storing data for the computing device 1500. For example, the storage device 1530 may be configured to include a hard disc; a magnetic disc such as a portable disc; an optical disc; a semiconductor memory device such as an erasable programmable read-only memory (EPROM), an electrically erasable PROM (EEPROM), and a flash memory; and a computer-readable medium including a CD-ROM or DVD-ROM disc; or the storage device 1530 may be configured to include the computer-readable medium. In addition, the computer program may be implemented tangibly in the computer-readable medium.

The high-speed interface 1550 and the low-speed interface 1560 may be used for interaction with the input/output device 1570. For example, an input device may include a camera including an audio sensor and/or an image sensor, a keyboard, a microphone, and a mouse; an output device may include a display, a speaker, and a haptic feedback device. In another example, the high-speed interface 1550 and the low-speed interface 1560 may be used for interfacing with a device in which a configuration or function for performing input and output operations is integrated into one entity, such as a touch screen.

According to an embodiment, the high-speed interface 1550 manages bandwidth-intensive operations for the computing device 1500, while the low-speed interface 1560 manages less bandwidth-intensive operations than the high-speed interface 1550, where the above functional assignment has been made merely for an illustrative purpose. According to an embodiment, the high-speed interface 1550 may be coupled to high-speed expansion ports capable of accommodating the memory 1520, the input/output device, and various expansion cards (not shown). In addition, the low-speed interface 1560 may be coupled to the storage device 1530 and low-speed expansion ports. Additionally, the low-speed expansion port, which may include various communication ports (e.g., USB, Bluetooth, Ethernet, and wireless Ethernet), may be coupled to one or more input/output devices 1570, such as a keyboard, a pointing device, and a scanner, or a networking device, such as a router or a switch, through a network adaptor.

The computing device 1500 may be implemented in many different forms. For example, the computing device 1500 may be implemented as a standard server or a group of standard servers. Additionally or alternatively, the computing device 1500 may be implemented as part of a rack server system or may be implemented as a personal computer, such as a laptop computer. In this case, constituting elements from the computing device 1500 may be combined with other constituting elements of an arbitrary mobile device (not shown). The computing device 1500 may include one or more other computing devices or may be configured to communicate with one or more computing devices.

FIG. 15 assumes that the input/output device 1570 is not included in the computing device 1500, but the present disclosure is not limited to the assumption; the input/output device 1570 may be configured to be integrated into the computing device 1500 to form a single device. In addition, FIG. 15 illustrates that the high-speed interface 1550 and/or the low-speed interface 1560 are illustrated as being configured separately from the processor 1510; however, the present disclosure is not limited thereto, and the high-speed interface 1550 and/or the low-speed interface 1560 may be configured to be included in the processor 1510.

The method and/or various embodiments described above may be implemented in digital electronic circuitry, computer hardware, firmware, software, and/or a combination thereof. Various embodiments of the present disclosure may be executed by a data processing device, for example, one or more programmable processors and/or one or more computing devices; or implemented as a computer-readable medium and/or a computer program stored on a computer-readable medium. The computer program may be written in any form of programming language including a compiled language or an interpreted language and may be distributed in any form such as a stand-alone program, a module, or a subroutine. The computer program may be distributed via a plurality of computing devices connected through one computing device and the same network and/or a plurality of distributed computing devices connected through a plurality of different networks.

The method and/or various embodiments described above may be performed by one or more processors configured to execute one or more computer programs that process, store, and/or manage arbitrary functions by operating based on input data or generating output data. For example, the method and/or various embodiments of the present disclosure may be performed by a special-purpose logic circuit such as a Field Programmable Gate Array (FPGA) or an Application Specific Integrated Circuit (ASIC); an apparatus and/or a system for performing the method and/or various embodiments of the present disclosure may be implemented as a special-purpose logic circuit such as an FPGA or an ASIC.

The one or more processors executing the computer program may include a general-purpose or special-purpose microprocessor and/or one or more processors of an arbitrary type of digital computing device. The processor may receive instructions and/or data from each of the read-only memory and the random-access memory or may receive instructions and/or data from the read-only memory and the random-access memory. In the present disclosure, the constituting elements of a computing device performing the method and/or embodiments may include one or more processors for executing instructions; and one or more memories for storing instructions and/or data.

According to an embodiment, the computing device may send and receive data to and from one or more mass storage devices for storing data. For example, the computing device may receive data from a magnetic or optical disc and transmit data to the magnetic or optical disc. A computer-readable medium suitable for storing instructions and/or data related to a computer program may include any form of non-volatile memory including a semiconductor memory device such as an Erasable Programmable Read-Only Memory (EPROM), an Electrically Erasable PROM (EEPROM), and a flash memory device; however, the present disclosure is not limited thereto. For example, a computer-readable medium may include a magnetic disc such as an internal hard disc or a removable disc, a photomagnetic disk, a CD-ROM disc, and a DVD-ROM disc.

To provide interaction with a user, the computing device may include a display device (e.g., a cathode ray tube (CRT) or a liquid crystal display (LCD)) for providing or displaying information to the user and a pointing device (e.g., a keyboard, a mouse, or a trackball) through which the user may provide input and/or commands to the computing device by the user; however, the present disclosure is not limited to the specific example above. In other words, the computing device may further include any other kind of device for providing interaction with the user. For example, the computing device may provide any form of sensory feedback to the user for interaction with the user, including visual feedback, auditory feedback, and/or tactile feedback. In response to the feedback, the user may provide input to the computing device through various gestures including a visual expression, voice, and motion.

In the present disclosure, various embodiments may be implemented in a computing device that includes a back-end component (e.g., a data server), a middleware component (e.g., an application server), and/or a front-end component. In this case, the constituting elements may be interconnected by any form or any medium of digital data communication, such as a communication network. According to an embodiment, the communication network includes a wired network such as Ethernet, a wired home network (Power Line Communication), a telephone line communication device, and RS-serial communication; a wireless network such as a mobile communication network, a wireless LAN (WLAN), Wi-Fi, and Bluetooth; or a combination of the wired and wireless networks. For example, the communication network may include a local area network (LAN) and a wide area network (WAN).

A computing device based on the illustrative embodiments described herein may be implemented using hardware and/or software configured to interact with a user, including a user device, a user interface (UI) device, a user terminal, or a client device. For example, the computing device may include a portable computing device such as a laptop computer. Additionally or alternatively, the computing device may include a Personal Digital Assistants (PDA), a tablet PC, a game console, a wearable device, an Internet of Things (IoT) device, a virtual reality (VR) device, and an augmented reality (AR) device but is not limited thereto. The computing device may further include other types of devices configured to interact with the user. In addition, the computing device may include a portable communication device (e.g., a mobile phone, a smartphone, or a wireless cellular phone) suitable for wireless communication over a network, such as a mobile communication network. The computing device may be configured to communicate wirelessly with a network server using wireless communication technologies and/or protocols such as Radio Frequency (RF), Microwave Frequency (MWF), and/or Infrared Ray Frequency (IRF).

Various embodiments of the present disclosure, including specific structural and functional details, are illustrative in nature. Accordingly, the embodiments of the present disclosure are not limited to those described above and may be implemented in various other forms. In addition, the terms used in the present disclosure are intended for describing part of embodiments and should not be construed as limiting the embodiments. For example, singular words and the descriptions above may be construed to include plural forms unless the context dictates otherwise.

Unless defined otherwise, terms used in the present disclosure, including technical or scientific terms, may convey the same meaning understood generally by those skilled in the art to which the present disclosure belongs. Among the terms used in the present disclosure, commonly used terms, such as those defined in ordinary dictionaries, should be interpreted to convey the same meaning in the context of related technology.

## Claims

1. A simulation device (100) for secondary battery production, the simulation device (100) comprising:
a) a memory (1520) configured to store at least one instruction; and
b) at least one processor (1510) configured to execute the at least one instruction stored in the memory (1520),
wherein the at least one instruction includes instructions for:
c1) executing (S1110, S1210) an apparatus operating unit (130, 210) comprising 3D Double Side Folding and End Of Line, 3D DSF&EOL, related to secondary battery production and quality information of a material (610, 710) produced by the 3D DSF&EOL, wherein the apparatus operating unit (130, 210) is a software module apparatus operating unit (130, 210) and the 3D DSF&EOL is a virtual 3D DSF&EOL;
c2) executing (S1110, S1210) a facility operating unit (120) comprising a plurality of adjustment parameters for determining an operation of the 3D DSF&EOL, wherein the facility operating unit (120) is a software module facility operating unit (120);
c3) obtaining (S1120, S1220) at least one of first user action information obtained through the apparatus operating unit (130, 210) or first user condition information obtained through the facility operating unit (120);
c4) determining (S1130, S1230) an operation of the 3D DSF&EOL based on at least one of the obtained first user action information or first user condition information;
c5) double-folding (S1140, S1240) a side wing (630, 730, 820) of a cell (620, 720, 810) related to the 3D DSF&EOL and checking characteristics based on the determined operation; and
c6) generating a defect scenario (922) based on error information (912) from an actual external secondary battery production equipment (910).

2. The simulation device (100) of claim 1, wherein the at least one instruction further includes instructions for:
executing a 3D DSF&EOL training scenario based on an operating process of the 3D DSF&EOL;
executing at least one of operating the 3D DSF&EOL according to the 3D DSF&EOL training scenario, displaying a user action guide on the apparatus operating unit (130, 210), or displaying a user condition guide on the facility operating unit (120);
obtaining (S1120, S1220) at least one of the first user action information based on the user action guide display or the first user condition information based on the user condition guide display; and
changing at least one of the apparatus operating unit (130, 210) or the facility operating unit (120) based on at least one of the obtained first user action information or first user condition information.

3. The simulation device (100) of claim 1 or 2, wherein the at least one instruction further includes instructions for:
determining one or more quality parameters for determining the quality of a material (610, 710, 810) produced by the 3D DSF&EOL;
calculating (S1330) a value corresponding to each of the determined one or more quality parameters, while the operation of the 3D DSF&EOL is being executed, based on the operation of the 3D DSF&EOL being executed; and
outputting quality information related to the quality of the material (610, 710, 810) produced by the 3D DSF&EOL based on the calculated value corresponding to each of the one or more quality parameters.

4. The simulation device (100) of claim 3, wherein the at least one instruction further includes instructions for:
determining one or more defect scenarios (510, 520, 530, 922) among a plurality of defect scenarios (510, 520, 530, 922) related to the quality of the material (610, 710) produced by the 3D DSF&EOL; and
changing at least one of the operation of the 3D DSF&EOL or the quality information related to the quality of the material (610, 710) based on the determined one or more defect scenarios (510, 520, 530, 922).

5. The simulation device (100) of claim 4, wherein the defect scenario (510, 520, 530, 922) includes at least one of a cutting amount defect scenario (510, 520, 530, 922), a full-width defect scenario, an exterior crack defect scenario, or an insulation voltage measurement defect scenario (510, 520, 530, 922).

6. The simulation device (100) of claim 5, wherein the at least one instruction further includes instructions for:
executing at least one of the cutting amount defect scenario (510, 520, 530, 922), the full-width defect scenario, the exterior crack defect scenario, or the insulation voltage measurement defect scenario (510, 520, 530, 922);
obtaining (S1310) at least one of second user action information touching or dragging at least a part of an area of the 3D DSF&EOL or second user condition information changing an adjustment parameter of the facility operating unit (120);
correcting (S1320) the 3D DSF&EOL based on at least one of the obtained second user action information or second user condition information;
calculating (S1330) a value corresponding to each of one or more quality parameters related to the quality of the material (610, 710) produced by the corrected 3D DSF&EOL; and
correcting (S1340) quality information related to the quality of the material (610, 710) produced by the corrected 3D DSF&EOL based on the calculated value corresponding to each of the one or more quality parameters.

7. The simulation device (100) of claim 6, wherein the at least one instruction further includes instructions for:
obtaining third user action information touching or dragging at least a part of an area corresponding to quality check of the material (610, 710) produced by the 3D DSF&EOL; and
outputting a defective portion of the material (610, 710) based on the third user action information.

8. The simulation device (100) of claim 7, wherein the at least one instruction further includes instructions for displaying a cup line (640, 740), a 270-degree folding line (750, 830), a 90-degree folding line (760), and a pouch end line (650, 770) on a side wing (630, 730, 820) of the material (610, 710) produced by the 3D DSF&EOL.

9. The simulation device (100) of claim 7 or 8, wherein the at least one instruction further includes instructions for displaying a state and a position of a conductive rubber of the 3D DSF&EOL.

10. The simulation device (100) of any one of claims 6 to 9, wherein the at least one instruction further includes instructions for outputting guide information including condition information and action information required to resolve the one or more defect scenarios (510, 520, 530, 922).

11. A simulation method of Double Side Folding and End Of Line, DSF&EOL, for secondary battery production, the simulation method comprising:
a) executing (S1110, S1210) an apparatus operating unit (130, 210) comprising 3D DSF&EOL related to secondary battery production and quality information of a material (610, 710) produced by the 3D DSF&EOL, wherein the apparatus operating unit (130, 210) is a software module apparatus operating unit (130, 210) and the 3D DSF&EOL is a virtual 3D DSF&EOL;
b) executing (S1110, S1210) a facility operating unit (120) comprising a plurality of adjustment parameters for determining an operation of the 3D DSF&EOL, wherein the facility operating unit (120) is a software module facility operating unit (120);
c) obtaining (S1120, S1220) at least one of first user action information obtained through the apparatus operating unit (130, 210) or first user condition information obtained through the facility operating unit (120);
d) determining (S1130, S1230) an operation of the 3D DSF&EOL based on at least one of the obtained first user action information or first user condition information;
e) double-folding (S1140, S1240) a side wing (630, 730, 820) of a cell (620, 720, 810) related to the 3D DSF&EOL and checking characteristics based on the determined operation and
f) generating a defect scenario (922) based on error information (912) from an actual external secondary battery production equipment (910).

12. The simulation method of claim 11, further comprising:
executing a 3D DSF&EOL training scenario based on an operating process of the 3D DSF&EOL;
executing at least one of operating the 3D DSF&EOL according to the 3D DSF&EOL training scenario, displaying a user action guide on the apparatus operating unit (130, 210), or displaying a user condition guide on the facility operating unit (120);
obtaining (S1120, S1220) at least one of the first user action information based on the user action guide display or the first user condition information based on the user condition guide display; and
changing at least one of the apparatus operating unit (130, 210) or the facility operating unit (120) based on at least one of the obtained first user action information or first user condition information.

13. The simulation method of claim 11 or 12, further comprising:
determining one or more quality parameters for determining the quality of a material (610, 710) produced by the 3D DSF&EOL;
calculating a value corresponding to each of the determined one or more quality parameters, while the operation of the 3D DSF&EOL is being executed, based on the operation of the 3D DSF&EOL being executed; and
outputting quality information related to the quality of the material (610, 710, 810) produced by the 3D DSF&EOL based on the calculated value corresponding to each of the one or more quality parameters.

14. The simulation method of claim 13, further comprising:
determining one or more defect scenarios (510, 520, 530, 922) among a plurality of defect scenarios (510, 520, 530, 922) related to the quality of the material (610, 710) produced by the 3D DSF&EOL; and
changing at least one of the operation of the 3D DSF&EOL or the quality information related to the quality of the material (610, 710) based on the determined one or more defect scenarios (510, 520, 530, 922).

15. A computer program stored in a computer-readable medium provided to execute the method according to any one of claims 11 to 14 on a computer.

## Patentansprüche

1. Simulationseinrichtung (100) zur Sekundärbatterieherstellung, wobei die Simulationseinrichtung (100) umfasst:
a) einen Speicher (1520), der konfiguriert ist, um mindestens eine Anweisung zu speichern; und
b) mindestens einen Prozessor (1510), der konfiguriert ist, um die mindestens eine Anweisung, die in dem Speicher (1520) gespeichert ist, auszuführen,
wobei die mindestens eine Anweisung Anweisungen enthält zum:
c1) Ausführen (S 1110, S1210) einer Vorrichtungsbetriebseinheit (130, 210), die eine 3D Doppel-Seiten-Faltung und Ende-der-Linie, 3D-DSF&EOL, in Bezug auf die Sekundärbatterieherstellung und Qualitätsinformationen eines Materials (610, 710), das durch die 3D-DSF&EOL hergestellt wird, umfasst, wobei die Vorrichtungsbetriebseinheit (130, 210) eine Softwaremodul-Vorrichtungsbetriebseinheit (130, 210) ist und die 3D-DSF&EOL eine virtuelle 3D-DSF&EOL ist;
c2) Ausführen (S1110, S1210) einer Anlagenbetriebseinheit (120), die eine Vielzahl von Einstellungsparametern zum Bestimmen eines Betriebs der 3D-DSF&EOL umfasst, wobei die Anlagenbetriebseinheit (120) eine Softwaremodul-Anlagenbetriebseinheit (120) ist;
c3) Erhalten (S1120, S1220) mindestens erster Benutzeraktionsinformationen, die durch die Vorrichtungsbetriebseinheit (130, 210) erhalten werden, und/oder erster Benutzerbedingungsinformationen, die durch die Anlagenbetriebseinheit (120) erhalten werden;
c4) Bestimmen (S1130, S1230) eines Betriebs der 3D-DSF&EOL basierend mindestens auf den erhaltenen ersten Benutzeraktionsinformationen und/oder ersten Benutzerbedingungsinformationen;
c5) Doppelfalten (S1140, S1240) eines Seitenflügels (630, 730, 820) einer Zelle (620, 720, 810) in Bezug auf die 3D-DSF&EOL und Prüfen von Charakteristiken basierend auf dem bestimmten Betrieb; und
c6) Erzeugen eines Defektszenarios (922) basierend auf Fehlerinformationen (912) von einem tatsächlichen externen Sekundärbatterieherstellungsgerät (910).

2. Simulationseinrichtung (100) nach Anspruch 1, wobei die mindestens eine Anweisung ferner Anweisungen enthält zum:
Ausführen eines 3D-DSF&EOL-Trainingsszenarios basierend auf einem Betriebsprozess der 3D-DSF&EOL;
Ausführen mindestens eines Betreibens der 3D-DSF&EOL gemäß dem 3D-DSF&EOL-Trainingsszenario und/oder eines Anzeigens einer Benutzeraktionsanleitung auf der Vorrichtungsbetriebseinheit (130, 210) und/oder eines Anzeigens einer Benutzerbedingungsanleitung auf der Anlagenbetriebseinheit (120);
Erhalten (S1120, S1220) mindestens der ersten Benutzeraktionsinformationen basierend auf der Benutzeraktionsanleitungsanzeige und/oder der ersten Benutzerbedingungsinformationen basierend auf der Benutzerbedingungsanleitungsanzeige; und
Ändern mindestens der Vorrichtungsbetriebseinheit (130, 210) und/oder der Anlagenbetriebseinheit (120) basierend auf mindestens den erhaltenen ersten Benutzeraktionsinformationen und/oder ersten Benutzerbedingungsinformationen.

3. Simulationseinrichtung (100) nach Anspruch 1 oder 2, wobei die mindestens eine Anweisung ferner Anweisungen enthält zum:
Bestimmen eines oder mehrerer Qualitätsparameter zum Bestimmen der Qualität eines Materials (610, 710, 810), das durch die 3D-DSF&EOL hergestellt wird;
Berechnen (S1330) eines Werts, der jedem der bestimmten einen oder mehreren Qualitätsparameter entspricht, während der Betrieb der 3D-DSF&EOL ausgeführt wird, basierend auf dem Betrieb der 3D-DSF&EOL, der ausgeführt wird; und
Ausgeben von Qualitätsinformationen in Bezug auf die Qualität des Materials (610, 710, 810), das durch die 3D-DSF&EOL hergestellt wird, basierend auf dem berechneten Wert, der jedem der einen oder mehreren Qualitätsparameter entspricht.

4. Simulationseinrichtung (100) nach Anspruch 3, wobei die mindestens eine Anweisung ferner Anweisungen enthält zum:
Bestimmen eines oder mehrerer Defektszenarien (510, 520, 530, 922) unter einer Vielzahl von Defektszenarien (510, 520, 530, 922) in Bezug auf die Qualität des Materials (610, 710), das durch die 3D-DSF&EOL hergestellt wird; und
Ändern mindestens des Betriebs der 3D-DSF&EOL und/oder der Qualitätsinformationen in Bezug auf die Qualität des Materials (610, 710) basierend auf dem bestimmten einen oder den bestimmten mehreren Defektszenarien (510, 520, 530, 922).

5. Simulationseinrichtung (100) nach Anspruch 4, wobei das Defektszenarium (510, 520, 530, 922) mindestens ein Schnittmengen-Defektszenarium (510, 520, 530, 922) und/oder ein Vollbreiten-Defektszenarium und/oder ein Außenriss-Defektszenarium und/oder ein Isolationsspannungsmessungs-Defektszenarium (510, 520, 530, 922) enthält.

6. Simulationseinrichtung (100) nach Anspruch 5, wobei die mindestens eine Anweisung ferner Anweisungen enthält zum:
Ausführen mindestens des Schnittmengen-Defektszenariums (510, 520, 530, 922) und/oder des Vollbreiten-Defektszenariums und/oder des Außenriss-Defektszenariums und/oder des Isolationsspannungsmessungs-Defektszenariums (510, 520, 530, 922);
Erhalten (S1310) mindestens von zweiten Benutzeraktionsinformationen, die mindestens einen Teil eines Bereichs der 3D-DSF&EOL berühren oder ziehen, und/oder zweiten Benutzerbedingungsinformationen, die einen Einstellungsparameter der Anlagenbetriebseinheit (120) ändern;
Korrigieren (S1320) der 3D-DSF&EOL basierend auf mindestens den erhaltenen zweiten Benutzeraktionsinformationen und/oder zweiten Benutzerbedingungsinformationen;
Berechnen (S1330) eines Werts, der jedem der einen oder mehreren Qualitätsparameter entspricht, die sich auf die Qualität des Materials (610, 710) beziehen, das durch die korrigierte 3D-DSF&EOL hergestellt wird; und
Korrigieren (S1340) von Qualitätsinformationen in Bezug auf die Qualität des Materials (610, 710), das durch die korrigierte 3D-DSF&EOL hergestellt wird, basierend auf dem berechneten Wert, der jedem der einen oder mehreren Qualitätsparameter entspricht.

7. Simulationseinrichtung (100) nach Anspruch 6, wobei die mindestens eine Anweisung ferner Anweisungen enthält zum:
Erhalten von dritten Benutzeraktionsinformationen, die mindestens einen Teil eines Bereichs berühren oder ziehen, der einer Qualitätsprüfung des Materials (610, 710) entspricht, das durch die 3D-DSF&EOL hergestellt wird; und
Ausgeben eines defekten Abschnitts des Materials (610, 710) basierend auf den dritten Benutzeraktionsinformationen.

8. Simulationseinrichtung (100) nach Anspruch 7, wobei die mindestens eine Anweisung ferner Anweisungen zum Anzeigen einer Becherlinie (640, 740), einer 270-Grad-Faltlinie (750, 830), einer 90-Grad-Faltlinie (760), und einer Beutelendlinie (650, 770) auf einem Seitenflügel (630, 730, 820) des Materials (610, 710), das durch die 3D-DSF&EOL hergestellt wird, enthält.

9. Simulationseinrichtung (100) nach Anspruch 7 oder 8, wobei die mindestens eine Anweisung ferner Anweisungen zum Anzeigen eines Zustands und einer Position eines leitfähigen Gummis der 3D-DSF&EOL enthält.

10. Simulationseinrichtung (100) nach einem der Ansprüche 6 bis 9, wobei die mindestens eine Anweisung ferner Anweisungen zum Ausgeben von Anleitungsinformationen einschließlich Bedingungsinformationen und Aktionsinformationen, die erforderlich sind, um das eine oder die mehreren Defektszenarien (510, 520, 530, 922) aufzulösen, enthält.

11. Simulationsverfahren zur Doppel-Seiten-Faltung und Ende-der-Linie, DSF&EOL, zur Sekundärbatterieherstellung, wobei das Simulationsverfahren umfasst:
a) Ausführen (S1110, S1210) einer Vorrichtungsbetriebseinheit (130, 210), die eine 3D-DSF&EOL in Bezug auf die Sekundärbatterieherstellung und Qualitätsinformationen eines Materials (610, 710), das durch die 3D-DSF&EOL hergestellt wird, umfasst, wobei die Vorrichtungsbetriebseinheit (130, 210) eine Softwaremodul-Vorrichtungsbetriebseinheit (130, 210) ist und die 3D-DSF&EOL eine virtuelle 3D-DSF&EOL ist;
b) Ausführen (S1110, S1210) einer Anlagenbetriebseinheit (120), die eine Vielzahl von Einstellungsparametern zum Bestimmen eines Betriebs der 3D-DSF&EOL umfasst, wobei die Anlagenbetriebseinheit (120) eine Softwaremodul-Anlagenbetriebseinheit (120) ist;
c) Erhalten (S1120, S1220) mindestens erster Benutzeraktionsinformationen, die durch die Vorrichtungsbetriebseinheit (130, 210) erhalten werden, und/oder erster Benutzerbedingungsinformationen, die durch die Anlagenbetriebseinheit (120) erhalten werden;
d) Bestimmen (S1130, S1230) eines Betriebs der 3D-DSF&EOL basierend auf mindestens den erhaltenen ersten Benutzeraktionsinformationen und/oder ersten Benutzerbedingungsinformationen;
e) Doppelfalten (S1140, S1240) eines Seitenflügels (630, 730, 820) einer Zelle (620, 720, 810) in Bezug auf die 3D-DSF&EOL und Prüfen von Charakteristiken basierend auf dem bestimmten Betrieb; und
f) Erzeugen eines Defektszenarios (922) basierend auf Fehlerinformationen (912) von einem tatsächlichen externen Sekundärbatterieherstellungsgerät (910).

12. Simulationsverfahren nach Anspruch 11, ferner umfassend:
Ausführen eines 3D-DSF&EOL-Trainingsszenarios basierend auf einem Betriebsprozess der 3D-DSF&EOL;
Ausführen mindestens eines Betreibens der 3D-DSF&EOL gemäß dem 3D-DSF&EOL-Trainingsszenario und/oder eines Anzeigens einer Benutzeraktionsanleitung auf der Vorrichtungsbetriebseinheit (130, 210) und/oder eines Anzeigens einer Benutzerbedingungsanleitung auf der Anlagenbetriebseinheit (120);
Erhalten (S1120, S1220) mindestens der ersten Benutzeraktionsinformationen basierend auf der Benutzeraktionsanleitungsanzeige und/oder der ersten Benutzerbedingungsinformationen basierend auf der Benutzerbedingungsanleitungsanzeige; und
Ändern mindestens der Vorrichtungsbetriebseinheit (130, 210) und/oder der Anlagenbetriebseinheit (120) basierend auf mindestens den erhaltenen ersten Benutzeraktionsinformationen und/oder ersten Benutzerbedingungsinformationen.

13. Simulationsverfahren nach Anspruch 11 oder 12, ferner umfassend:
Bestimmen eines oder mehrerer Qualitätsparameter zum Bestimmen der Qualität eines Materials (610, 710), das durch die 3D-DSF&EOL hergestellt wird;
Berechnen eines Werts, der jedem der bestimmten einen oder mehreren Qualitätsparameter entspricht, während der Betrieb der 3D-DSF&EOL ausgeführt wird, basierend darauf, dass der Betrieb der 3D-DSF&EOL ausgeführt wird; und
Ausgeben von Qualitätsinformationen in Bezug auf die Qualität des Materials (610, 710, 810), das durch die 3D-DSF&EOL hergestellt wird, basierend auf dem berechneten Wert, der jedem der einen oder mehreren Qualitätsparameter entspricht.

14. Simulationsverfahren nach Anspruch 13, ferner umfassend:
Bestimmen eines oder mehrerer Defektszenarien (510, 520, 530, 922) unter einer Vielzahl von Defektszenarien (510, 520, 530, 922) in Bezug auf die Qualität des Materials (610, 710), das durch die 3D-DSF&EOL hergestellt wird; und
Ändern mindestens des Betriebs der 3D-DSF&EOL und/oder der Qualitätsinformationen in Bezug auf die Qualität des Materials (610, 710) basierend auf dem bestimmten einen oder den bestimmten mehreren Defektszenarien (510, 520, 530, 922).

15. Computerprogramm, das in einem computerlesbaren Medium gespeichert ist, das bereitgestellt wird, um das Verfahren nach einem der Ansprüche 11 bis 14 auf einem Computer auszuführen.

## Revendications

1. Dispositif de simulation (100) pour la production de batteries secondaires, ledit dispositif de simulation (100) comprenant :
a) une mémoire (1520) configurée pour stocker au moins une instruction ; et
b) au moins un processeur (1510) configuré pour exécuter ladite au moins une instruction stockée en mémoire (1520),
où ladite au moins une instruction comprend des instructions pour :
c1) l'exécution (S110, S1210) d'une unité de commande de dispositif (130, 210) comprenant double pliage latéral et fin de ligne 3D, DSF&EOL 3D, associés à la production de batteries secondaires, et des informations de qualité d'un matériel (610, 710) produit par le DSF&EOL 3D, ladite unité de commande de dispositif (130, 210) étant une unité de commande de dispositif à module logiciel (130, 210) et le DSF&EOL 3D étant un DSF&EOL 3D virtuel ;
c2) l'exécution (S1110, S1210) d'une unité de commande d'installation (120) comprenant une pluralité de paramètres de réglage pour déterminer l'actionnement du DSF&EOL 3D, ladite unité de commande d'installation (120) étant une unité de commande d'installation à module logiciel (120) ;
c3) l'obtention (S1120, S1220) de premières informations d'action d'utilisateur obtenues par l'unité de commande de dispositif (130, 210) et/ou de premières informations d'état d'utilisateur obtenues par l'unité de commande d'installation (120) ;
c4) la détermination (S1130, S1230) d'un actionnement du DSF&EOL 3D sur la base des premières informations d'action d'utilisateur et/ou des premières informations d'état d'utilisateur obtenues ;
c5) le double pliage (S1140, S1240) d'une aile latérale (630, 730, 820) d'une cellule (620, 720, 810) associée au DSF&EOL 3D et le contrôle de caractéristiques sur la base de l'actionnement déterminé ; et
c6) la génération d'un scénario de défaut (922) sur la base d'informations d'erreur (912) provenant d'un équipement extérieur réel de production de batteries secondaires (910).

2. Dispositif de simulation (100) selon la revendication 1, où ladite au moins une instruction comprend en outre des instructions pour :
l'exécution d'un scénario d'apprentissage du DSF&EOL 3D sur la base d'un processus d'actionnement du DSF&EOL 3D ;
l'exécution d'un actionnement du DSF&EOL 3D en fonction du scénario d'apprentissage du DSF&EOL 3D et/ou l'affichage d'un guide d'action d'utilisateur sur l'unité de commande de dispositif (130, 210) et/ou l'affichage d'un guide d'état d'utilisateur sur l'unité de commande d'installation (120) ;
l'obtention (S1120, S1220) des premières informations d'action d'utilisateur sur la base de l'affichage du guide d'action d'utilisateur et/ou des premières informations d'état d'utilisateur sur la base de l'affichage du guide d'action d'utilisateur ; et
la modification de l'unité de commande de dispositif (130, 210) et/ou de l'unité de commande d'installation (120) sur la base des premières informations d'action d'utilisateur obtenues et/ou des premières informations d'état d'utilisateur.

3. Dispositif de simulation (100) selon la revendication 1 ou la revendication 2, où ladite au moins une instruction comprend en outre des instructions pour :
déterminer un ou plusieurs paramètres de qualité pour déterminer la qualité d'un matériel (610, 710, 810) produit par la DSF&EOL 3D ;
calculer (S1330) une valeur correspondant à chacun desdits un ou plusieurs paramètres de qualité déterminés sur la base de l'actionnement du DSF&EOL 3D, pendant que l'actionnement du DSF&EOL 3D en est cours d'exécution ; et
émettre des informations de qualité relatives à la qualité du matériel (610, 710, 810) produit par l'DSF&EOL 3D sur la base de la valeur calculée correspondant à chacun desdits un ou plusieurs paramètres de qualité.

4. Dispositif de simulation (100) selon la revendication 3, où ladite au moins une instruction comprend en outre des instructions pour :
déterminer un ou plusieurs scénarios de défaut (510, 520, 530, 922) parmi une pluralité de scénarios de défaut (510, 520, 530, 922) relatifs à la qualité du matériel (610, 710) produit par l'DSF&EOL 3D ; et
modifier l'actionnement du DSF&EOL 3D et/ou les informations de qualité relatives à la qualité du matériel (610, 710) sur la base du ou des scénarios de défaut déterminés (510, 520, 530, 922).

5. Dispositif de simulation (100) selon la revendication 4, où le scénario de défaut (510, 520, 530, 922) comprend un scénario de défaut de plage de coupe (510, 520, 530, 922), un scénario de défaut de largeur totale, un scénario de défaut de fissure extérieure, ou un scénario de défaut de mesure de tension d'isolation (510, 520, 530, 922).

6. Dispositif de simulation (100) selon la revendication 5, où ladite au moins une instruction comprend en outre des instructions pour :
exécuter au moins un scénario de défaut entre le scénario de défaut de plage de coupe (510, 520, 530, 922), le scénario de défaut de largeur totale, le scénario de défaut de fissure extérieure, ou le scénario de défaut de mesure de tension d'isolation (510, 520, 530, 922) obtenir (S1310) des deuxièmes informations d'action d'utilisateur touchant ou effleurant au moins une partie du DSF&EOL 3D et/ou des deuxièmes informations d'état d'utilisateur modifiant un paramètre de réglage de l'unité de commande d'installation (120) ;
corriger (S1320) le DSF&EOL 3D sur la base des deuxièmes informations d'action d'utilisateur et/ou des deuxièmes informations d'état d'utilisateur obtenues ;
calculer (S1330) une valeur correspondant à chacun desdits un ou plusieurs paramètres de qualité relatifs à la qualité du matériel (610, 710) produit par l'DSF&EOL 3D corrigé ; et
corriger (S1340) des informations de qualité relatives à la qualité du matériel (610, 710) produit par l'DSF&EOL 3D corrigée sur la base de la valeur calculée correspondant à chacun desdits un ou plusieurs paramètres de qualité.

7. Dispositif de simulation (100) selon la revendication 6, où ladite au moins une instruction comprend en outre des instructions pour :
obtenir des troisièmes informations d'action d'utilisateur touchant ou effleurant au moins une partie d'une surface correspondant à un contrôle de qualité du matériel (610, 710) produit par le DSF&EOL 3D ; et
sortir une partie défectueuse du matériel (610, 710) sur la base des troisièmes informations d'action d'utilisateur.

8. Dispositif de simulation (100) selon la revendication 7, où ladite au moins une instruction comprend en outre des instructions pour afficher une ligne de coupe (640, 740), une ligne de pliage à 270 degrés (750, 830), une ligne de pliage à 90 degrés (760), et une ligne d'extrémité de poche (650, 770) sur une aile latérale (630, 730, 820) du matériel (610, 710) produit par le DSF&EOL 3D.

9. Dispositif de simulation (100) selon la revendication 7 ou la revendication 8, où ladite au moins une instruction comprend en outre des instructions pour afficher un état et une position d'un caoutchouc conducteur du DSF&EOL 3D.

10. Dispositif de simulation (100) selon l'une des revendications 6 à 9, où ladite au moins une instruction comprend en outre des instructions pour la sortie d'informations de guide comprenant des informations d'état et des informations d'action requises pour résoudre le ou les scénarios de défaut (510, 520, 530, 922).

11. Procédé de simulation de double pliage latéral et fin de ligne, DSF&EOL, pour la production de batteries secondaires, ledit procédé de simulation comprenant :
a) l'exécution (S110, S1210) d'une unité de commande de dispositif (130, 210) comprenant un DSF&EOL 3D, associé à la production de batteries secondaires, et des informations de qualité d'un matériel (610, 710) produit par le DSF&EOL 3D, ladite unité de commande de dispositif (130, 210) étant une unité de commande de dispositif à module logiciel (130, 210) et le DSF&EOL 3D étant un DSF&EOL 3D virtuel ;
b) l'exécution (S1110, S1210) d'une unité de commande d'installation (120) comprenant une pluralité de paramètres de réglage pour déterminer l'actionnement du DSF&EOL 3D, ladite unité de commande d'installation (120) étant une unité de commande d'installation à module logiciel (120) ;
c) l'obtention (S1120, S1220) de premières informations d'action d'utilisateur obtenues par l'unité de commande de dispositif (130, 210) et/ou de premières informations d'état d'utilisateur obtenues par l'unité de commande d'installation (120) ;
d) la détermination (S1130, S1230) d'un actionnement du DSF&EOL 3D sur la base des premières informations d'action d'utilisateur et/ou des premières informations d'état d'utilisateur obtenues ;
e) le double pliage (S1140, S1240) d'une aile latérale (630, 730, 820) d'une cellule (620, 720, 810) associée au DSF&EOL 3D et le contrôle de caractéristiques sur la base de l'actionnement déterminé ; et
f) la génération d'un scénario de défaut (922) sur la base d'informations d'erreur (912) provenant d'un équipement extérieur réel de production de batteries secondaires (910).

12. Procédé de simulation selon la revendication 11, comprenant en outre :
l'exécution d'un scénario d'apprentissage d'DSF&EOL 3D sur la base d'un processus d'actionnement du DSF&EOL 3D ;
l'exécution d'un actionnement du DSF&EOL 3D en fonction du scénario d'apprentissage de DSF&EOL 3D et/ou l'affichage d'un guide d'action d'utilisateur sur l'unité de commande de dispositif (130, 210) et/ou l'affichage d'un guide d'état d'utilisateur sur l'unité de commande d'installation (120) ;
l'obtention (S1120, S1220) des premières informations d'action d'utilisateur sur la base de l'affichage du guide d'action d'utilisateur et/ou des premières informations d'état d'utilisateur sur la base de l'affichage du guide d'action d'utilisateur ; et
la modification de l'unité de commande de dispositif (130, 210) et/ou de l'unité de commande d'installation (120) sur la base des premières informations d'action d'utilisateur obtenues et/ou des premières informations d'état d'utilisateur.

13. Procédé de simulation selon la revendication 11 ou la revendication 12, comprenant en outre :
la détermination d'un ou de plusieurs paramètres de qualité pour déterminer la qualité d'un matériel (610, 710) produit par le DSF&EOL 3D ;
le calcul d'une valeur correspondant à chacun desdits un ou plusieurs paramètres de qualité déterminés sur la base de l'actionnement du DSF&EOL 3D, pendant que l'actionnement du DSF&EOL 3D en est cours d'exécution ; et
l'émission d'informations de qualité relatives à la qualité du matériel (610, 710, 810) produit par le DSF&EOL 3D sur la base de la valeur calculée correspondant à chacun desdits un ou plusieurs paramètres de qualité.

14. Procédé de simulation selon la revendication 13, comprenant en outre :
la détermination d'un ou de plusieurs scénarios de défaut (510, 520, 530, 922) parmi une pluralité de scénarios de défaut (510, 520, 530, 922) relatifs à la qualité du matériel (610, 710) produit par l'DSF&EOL 3D ; et
la modification de l'actionnement du DSF&EOL 3D et/ou des informations de qualité relatives à la qualité du matériel (610, 710) sur la base du ou des scénarios de défaut déterminés (510, 520, 530, 922).

15. Programme informatique enregistré sur un support lisible par ordinateur, prévu pour exécuter sur un ordinateur un procédé selon l'une des revendications 11 à 14.
